(19) Europäisches Patentamt
European Patent Office
Office européen des brevets

(11) **EP 1 384 863 B1**

(12) **FASCICULE DE BREVET EUROPEEN**

(45) Date de publication et mention
de la délivrance du brevet:
**30.01.2019 Bulletin 2019/05**

(51) Int Cl.:
***F01L 9/04*** *(2006.01)*          ***F01L 13/00*** *(2006.01)*
***F02D 13/02*** *(2006.01)*

(21) Numéro de dépôt: **03300072.0**

(22) Date de dépôt: **21.07.2003**

(54) **Moteur à combustion interne comprenant un processeur et des actionneurs électromécaniques de commande de soupapes**

Brennkraftmaschine mit einem Prozessor und elektromagnetischen Ventilaktuatoren

Internal combustion engine with a processor and electromagnetic valve actuators

(84) Etats contractants désignés:
**AT BE BG CH CY CZ DE DK EE ES FI FR GB GR HU IE IT LI LU MC NL PT RO SE SI SK TR**

(30) Priorité: **26.07.2002 FR 0209550**

(43) Date de publication de la demande:
**28.01.2004 Bulletin 2004/05**

(73) Titulaire: **PSA Automobiles SA**
**78300 Poissy (FR)**

(72) Inventeur: **Bernier, Loic**
**92250, LA GARENNE COLOMBES (FR)**

(74) Mandataire: **Ménès, Catherine et al**
**PSA Automobiles SA**
**VEIP - VV1400**
**Route de Gisy**
**78140 Velizy Villacoublay (FR)**

(56) Documents cités:
**EP-A- 0 594 462     EP-A- 1 063 407**
**EP-A- 1 136 661     US-A- 5 598 814**

• **PATENT ABSTRACTS OF JAPAN vol. 2002, no. 03, 3 avril 2002 (2002-04-03) & JP 2001 329874 A (TOYOTA MOTOR CORP), 30 novembre 2001 (2001-11-30)**

**Description**

La présente invention se rapporte à un moteur à combustion interne muni d'un processeur et d'actionneurs électromécaniques de commande de soupapes constituant un perfectionnement connu de EP 1 136 661.

On sait que dans un moteur à combustion interne chaque cylindre fonctionne selon un cycle prédéterminé pour fournir un couple moteur. Par exemple, un cylindre dit "à quatre temps" effectue un cycle comprenant une étape d'admission d'un mélange combustible dans une chambre de combustion, une étape de compression de ce mélange jusqu'à sa combustion, une étape de détente des gaz de combustion et une étape d'échappement de ces gaz de la chambre.

Au cours d'un cycle, les échanges de gaz entre l'intérieur et l'extérieur de la chambre de combustion sont contrôlés par des soupapes d'admission ou d'échappement, de telles soupapes étant dites "ouvertes" ("fermées") lorsqu'elles permettent (empêchent) des échanges de gaz entre l'intérieur et l'extérieur de la chambre de combustion.

L'ouverture ou la fermeture d'une soupape est déterminée par le fonctionnement du cylindre. Par exemple, lors d'une étape d'admission, la(les) soupape(s) d'admission est (sont) ouverte(s), les soupapes d'admission et d'échappement étant fermées lors des étapes de compression et de détente tandis que, lors de l'étape d'échappement, la(les) soupape(s) d'échappement est (sont) ouverte(s).

Les positions ouvertes ou fermées des soupapes sont commandées soit de façon mécanique, soit de façon électromécanique comme décrit ci-dessous

Dans le premier cas (commande mécanique) la soupape est mécaniquement solidaire du piston et sa position est fonction de la position du piston dans la chambre de combustion.

Dans le second cas, la soupape est commandée par un dispositif ou actionneur électromécanique comprenant par exemple des ressorts combinés à des électroaimants pour contrôler l'ouverture ou la fermeture de cette soupape.

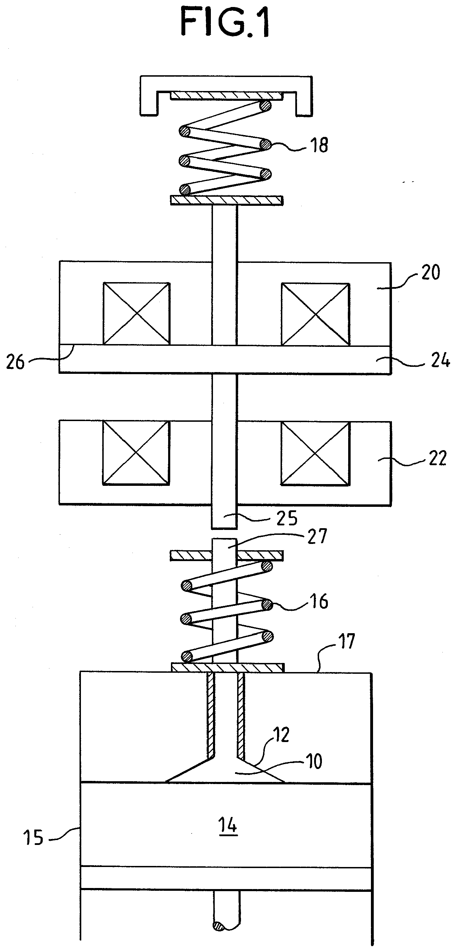

La figure 1 représente un tel actionneur commandant une soupape 10 représentée en position fermée, c'est-à-dire appliquée contre son siège 12. Dans cette position, l'intérieur 14 de la chambre de combustion du cylindre 15 est isolé de l'extérieur 17 de ce cylindre.

La soupape 10 est maintenue fermée ou ouverte grâce à l'actionneur électromécanique comprenant des ressorts 16 et 18 et des électroaimants 20 et 22. L'électroaimant 20, le plus éloigné de la chambre de combustion, est destiné à attirer un plateau 24 pour l'appliquer contre une face 26 du circuit magnétique de cet électroaimant 20. La soupape 10 est alors fermée par l'action du ressort 16 sur sa tige 27.

Le second électroaimant 22 permet de commander la soupape 10 en position ouverte. A cet effet, la bobine de cet électroaimant 22 est activée après désactivation de la bobine de l'électroaimant 20. Le plateau 24 se sépare alors de la face 26 du circuit magnétique de l'électroaimant 20, cette séparation étant facilitée par l'action du ressort 18. Quand l'électroaimant 22 est activé, il attire le plateau 24 vers une face de son circuit magnétique. Cette attraction étant supérieure à l'action du ressort 16, il ouvre la soupape 10 par l'action d'une tige 25, solidaire du plateau 24, sur la tige 27 de la soupape 10.

Il est connu de contrôler le fonctionnement d'un moteur comportant n cylindres en modifiant le nombre de cylindres actifs, c'est-à-dire fournissant un couple moteur, en fonction du couple commandé au moteur et/ou du régime de ce moteur. A cet effet, le dispositif peut maintenir fermées les soupapes de p cylindres désactivés de façon à commander un mode de fonctionnement du moteur à (n-p) cylindres actifs.

La présente invention résulte de la constatation que l'utilisation d'actionneurs électromécaniques reliés à un processeur permet de commander les soupapes d'un moteur suivant différents modes de fonctionnements contrôlant respectivement le nombre de cylindres actifs, comme précédemment décrit, le nombre et/ou le type de soupapes actives par cylindre actif et le type de levée utilisé pour chaque soupape comme décrit ci-dessous.

Lorsqu'un cylindre est muni d'une pluralité de soupapes individuellement commandées par des actionneurs, le processeur peut contrôler le nombre de soupapes actives par cylindre (une soupape désactivée étant maintenue fermée). De plus, lorsque les soupapes d'admission effectuent des fonctions différentes, telles que contrôler une admission d'air et contrôler une admission d'air et de carburant, le processeur peut contrôler le type de soupapes actives par cylindre.

Par ailleurs, une soupape peut être commandée selon un mode de levée de soupape dit classique, les instants d'ouverture et de fermeture de la soupape étant commandés selon des délais prédéterminés, ou selon un mode de levée dit balistique, seul l'instant d'ouverture étant prédéterminé et commandé tandis que l'instant de fermeture est déterminé par le temps nécessaire à la soupape pour effectuer un -aller-retour passant par une position ouverte à partir d'une position fermée.

L'invention résulte aussi de la constatation qu'un processeur commandant simultanément au moins deux des modes de fonctionnement précédemment décrits pourrait perturber le fonctionnement du moteur si ses commandes ne sont pas synchronisées et/ou cohérentes. Par exemple, si une première commande modifie le nombre de cylindres actifs, en maintenant fermées les soupapes d'admission de deux cylindres, tandis qu'une deuxième commande postérieure est émise de façon à modifier le nombre de soupapes d'admission actives dans les cylindres d'un moteur, les soupapes d'admission des cylindres désactivées par la première commande doivent ignorer la deuxième commande et être maintenues fermées. En d'autres termes, la deuxième commande ne doit s'appliquer qu'aux soupapes des cylindres actifs.

C'est pourquoi, la présente invention concerne un moteur à combustion interne comportant un processeur et des cylindres munis de soupapes commandées au moyen d'actionneurs électromécaniques, le processeur comporte des moyens pour modifier le couple demandé par le conducteur du véhicule en un couple filtré commandé au moteur, atténuant les variations de ce couple demandé, et pour déterminer en fonction de ce couple filtré un mode cylindre relatif au nombre de cylindres actifs, un cylindre désactivé étant tel que ses soupapes sont maintenues et opérer l'activation ou la désactivation des cylindres lors d'un changement de mode cylindre, caractérisé en ce que le processeur comporte également des moyens pour, après le choix des cylindres actifs, déterminer pour ces cylindres actifs, un mode soupape relatif au nombre de soupapes d'admission actives par cylindre actif, et après la détermination du mode soupape, déterminer un mode de levée des soupapes actives des cylindres actifs, entre un mode de levée classique, dans lequel les instants d'ouverture et de fermeture des soupapes sont déterminés et commandés et un mode de levé balistique, dans lequel l'instant d'ouverture des soupapes est déterminé et commandé, l'instant de fermeture étant alors déterminé par le temps nécessaire pour qu'une soupape passe d'une positon fermée à la position ouverte puis, sans arrêt, revienne à une position fermée.

En effet, le choix du nombre de cylindres actifs a plus d'influence sur les performances du moteur que le choix du nombre et/ou du type de soupapes actives par cylindre, le choix du mode de levée de la soupape ayant moins d'influence que ces deux choix précédents. La hiérarchisation dans la détermination des modes de fonctionnement du cylindre diminue alors les perturbations que les changements de modes peuvent provoquer dans le fonctionnement du moteur, comme par exemple des secousses ou des vibrations du moteur.

En outre, des stratégies de transitions entre les différents modes de fonctionnement peuvent être développées et appliquées par simple chargement dans l'unité centrale.

La commande électrique des soupapes peut être utilisée en combinaison avec une unité centrale de commande à microprocesseur qui filtre le couple commandé $C_{brut}$ par l'utilisateur du véhicule en un couple $C_{filtre}$ commandé au moteur de façon à améliorer l'agrément de conduite, par exemple en empêchant des variations brusques de couple moteur.

En d'autres termes, le couple $C_{brut}$ commandé par le conducteur peut différer du couple $C_{filtre}$ commandé au moteur si l'unité centrale modifie, en fonction de paramètres tels que la vitesse ou la trajectoire d'un véhicule, le couple $C_{bmt}$ commandé en un couple $C_{filtre}$ distinct pour adapter le fonctionnement du moteur à un type de conduite, par exemple une conduite sportive comportant de fortes accélérations.

Dans une réalisation, le processeur comporte des moyens pour déterminer un ou plusieurs modes en fonction d'informations concernant le moteur relatives à au moins un des paramètres suivants: le régime du moteur, le couple commandé au moteur, la température du liquide de refroidissement, la composition et/ou la température des gaz d'échappement, l'embrayage d'une vitesse, et/ou la quantité de carburant injectée dans les cylindres.

Le processeur peut comporter des moyens pour déterminer un ou plusieurs modes en fonction d'informations relatives à la conduite du véhicule qui sont relatives à au moins un des paramètres suivants: la vitesse du véhicule, la trajectoire du véhicule, un mode de conduite du véhicule.

Lorsque le moteur comprend un nombre pair de cylindres, le processeur comprend, dans un exemple, des moyens pour positionner le fonctionnement du moteur selon l'un des trois modes suivants : un premier mode pour lequel tous les cylindres sont actifs, un second mode pour lequel seule la moitié des cylindres sont actifs, et un troisième mode selon lequel un nombre pair inférieur à la moitié des cylindres sont actifs.

Dans ce cas, si le moteur comprend quatre cylindres fonctionnant suivant des cycles à quatre temps, le processeur comporte, selon une réalisation, lorsque seuls deux cylindres sont actifs, des moyens pour maintenir actifs deux cylindres décalés d'un demi cycle de fonctionnement.

Le processeur comporte, dans une réalisation, des moyens pour que le changement d'un mode cylindre à un autre mode cylindre s'effectue lorsque le régime de ce moteur atteint des valeurs seuils ($R_1$, $R'_1$; $R_2$, $R'_2$), ces valeurs seuils étant différentes selon que le changement de mode s'effectue du premier mode vers le deuxième mode ou du deuxième mode vers le premier mode.

Le processeur peut comprendre des moyens pour modifier le couple demandé par le conducteur du véhicule en un couple filtré atténuant les variations de ce couple demandé et pour déterminer un mode de fonctionnement du moteur en fonction de ce couple filtré.

Dans ce cas, selon une réalisation, le processeur comporte des moyens pour que le changement d'un mode cylindre à un autre mode cylindre s'effectue lorsque le couple ($C_{filtre}$) filtré atteint un couple de test ($C_{40}''(min)$, $C_{40}'(min)$ $C_{40}''(max)$; $C_{40}'(max)$) et lorsque le couple ($C_{brut}$) demandé par le conducteur atteint un couple ($C_{40}(min)$, $C_{40}(max)$) de déclenchement de mode.

Le processeur peut comprendre - lorsque le couple ($C_{filtre}$) filtré atteint un couple de test ($C_{40}''(min)$, $C_{40}'(min)$ $C_{40}''(max)$; $C_{40}'(max)$) et le couple ($C_{brut}$) demandé par le conducteur atteint un premier couple ($C_{40}(min)$, $C_{40}(max)$) de déclenchement - des moyens pour empêcher un changement de mode cylindre lorsque le couple commandé ($C_{brut}$)

atteint un deuxième couple ($C_{40}(min)$, $C_{40}(max)$) de déclenchement.

Selon une réalisation, le processeur comporte des moyens pour que le changement d'un mode à un autre mode s'effectue lorsque le couple ($C_{filtre}$) filtré atteint un couple de test ($C_{40}"(min)$, $C_{40}'(min)$ $C_{40}"(max)$; $C_{40}'(max)$) et que la variation ($\Delta C_{brut}$) de couple ($C_{brut}$) demandé est supérieure à un seuil maximal positif ($DC_{max}$; $DC'_{max}$) de variation lorsque la variation est positive, ou inférieure à un seuil minimal négatif de variation ($DC"_{min}$) lorsque la variation est négative.

Le processeur peut comporter des moyens pour que le changement d'un mode cylindre à un autre mode cylindre s'effectue lorsque le couple ($C_{filtre}$) filtré atteint un couple de test ($C_{40}"(min)$, $C_{40}'(min)$ $C_{40}'(max)$ ; $C_{40}'(max)$) et que la variation (($\Delta C_{brut}$) de couple ($C_{brut}$) commandée est constamment comprise entre un seuil maximal ($DC_{max}$; $DC_{max}$; $DC_{max}$) et un seuil minimal ($DC_{min}$; $DC'_{min}$; $DC"_{min}$) de variation pendant un délai donné.

Le processeur comporte, dans une réalisation, des moyens pour que, lorsque des cylindres sont en cours de désactivation, le couple fourni par les cylindres maintenus actifs augmente de façon à compenser le couple décroissant des cylindres en désactivation.

Dans ce cas, le processeur comporte, dans un exemple, des moyens pour que le couple fourni par les cylindres maintenus actifs augmente linéairement tandis que le couple généré par les cylindres à désactiver diminue linéairement, à partir du couple moteur par ces cylindres, par exemple en fonction du nombre (n) de demi-tours moteurs réalisés pendant la désactivation et d'un paramètre (k) déterminant l'intensité de ces augmentations et diminutions de couple.

Dans ce cas, le processeur peut comporter des moyens pour que le couple décroissant des cylindres en cours de désactivation soit stabilisé à un premier couple seuil ($C_{mini}$) et pour que le couple croissant des cylindres actifs soit maintenu à un deuxième couple seuil ($2C_{filtre} - C_{mini}$) fonction du premier couple seuil et du couple ($C_{filtre}$) commandé au moteur.

Le processeur comprend, dans un exemple, des moyens pour que le premier couple seuil ($C_{mini}$) corresponde à un couple limite tel que les cylindres désactivables ne peuvent pas fournir un couple positif inférieur à ce couple limite.

Selon une réalisation, les soupapes d'échappement des cylindres désactivés étant commandées au moyen d'actionneurs électrohydrauliques, le processeur comprend des moyens pour commander la fermeture des soupapes d'échappement des cylindres désactivés lorsqu'un des cylindres effectue un point mort haut de son cycle de fonctionnement.

Dans ce cas, le processeur peut comporter des moyens pour que le cylindre effectuant le point mort haut délivre un couple fonction du premier couple ($C_{mini}$) seuil, du couple ($C_{filtre}$) commandé et du couple ($-C_{frotterent}$) fourni par un cylindre désactivé.

Dans un mode de réalisation, le processeur comporte des moyens pour que, lors de l'activation de cylindres désactivés, le couple fourni par les cylindres maintenus actifs diminue linéairement (tandis que le couple généré par les cylindres en cours d'activation augmente linéairement vers le couple moteur demandé ($C_{filtre}$), par exemple en fonction du nombre (n) de demi-tours moteur réalisés pendant l'activation et d'un paramètre (k) déterminant l'intensité de ces augmentations et diminutions de couple.

Dans ce cas, le processeur peut comporter des moyens pour que la commande d'activation des cylindres désactivés soit déclenchée lorsqu'un des cylindres effectue un point mort haut de son cycle de fonctionnement. Le processeur peut aussi comporter des moyens pour que, au cours du point mort haut du cylindre actif, ce dernier délivre un couple fonction d'un premier couple ($C_{mini}$) seuil, du couple commandé ($C_{filtre}$) et du couple ($-C_{frottment}$) fourni par un cylindre désactivé.

Le processeur comporte, par exemple, des moyens pour qu'un deuxième point mort haut d'un cylindre en cours d'activation succède au point mort haut du cylindre actif, le cylindre en cours d'activation générant un couple lors de ce deuxième point mort haut égal au premier couple seuil ($C_{mini}$).

Le processeur peut aussi comprendre des moyens pour que le premier couple seuil ($C_{mini}$) corresponde à un couple limite tel qu'un cylindre pouvant être désactivé ne peut fournir un couple positif inférieur à ce couple limite.

Le processeur comporte selon un mode de réalisation, des moyens pour que tous les cylindres soient actifs lorsque le moteur fonctionne est débrayé, lorsque le moteur fonctionne au ralenti et/ou lorsque le conducteur n'appuie pas sur l'accélérateur.

Lorsque chaque cylindre comporte au moins une soupape contrôlant une admission d'un mélange d'air et de carburant et au moins une soupape contrôlant une admission d'air, le processeur peut comporter des moyens pour commander au moins deux des modes soupapes suivants: un mode activant toutes les soupapes d'admission, un mode activant uniquement la (ou les) soupape(s) contrôlant une admission d'air et de carburant, un mode activant uniquement la (ou les) soupape(s) contrôlant une admission d'air, un mode désactivant toutes les soupapes d'admission.

Lorsque le moteur comporte quatre cylindres, le processeur comporte, dans un exemple, des moyens pour activer et/ou désactiver, lors d'un changement de mode soupapes, les soupapes d'admission d'un premier cylindre, puis les soupapes d'admission d'un deuxième cylindre décalé d'un demi cycle vis-à-vis de ce premier cylindre, puis les soupapes d'admission des deux cylindres restant.

Dans une réalisation, le processeur comprend des moyens pour utiliser un mode de levée des soupapes d'admission classique, comportant une commande d'ouverture et une commande de fermeture des soupapes, ou un mode de levée balistique, comportant une unique commande d'ouverture ou de fermeture de la soupape d'admission.

Dans ce cas, le processeur peut comporter des moyens pour que le changement de mode de levée s'effectue lorsque le régime ou le couple de ce moteur atteint des valeurs seuils, ces valeurs seuils étant différentes selon que le changement de mode s'effectue d'un premier mode de levée vers un deuxième mode ou du deuxième mode de levée vers le premier mode.

Le processeur peut aussi comporter des moyens pour commander le mode classique sans transition à partir d'un mode balistique.

Lorsque le moteur comporte quatre cylindres, le processeur comporte, dans une réalisation, des moyens pour commander le mode balistique à partir d'un mode classique, ce changement de mode s'appliquant aux soupapes d'admission d'un premier cylindre, puis aux soupapes d'admission d'un deuxième cylindre décalé d'un demi cycle vis-à-vis de ce premier cylindre, puis aux soupapes d'admission des deux cylindres restant.

D'autres caractéristiques et avantages de l'invention apparaîtront avec la description effectuée ci-dessous, à titre descriptif et non limitatif, en se référant aux figures suivantes :

la figure 1, déjà décrite, représente un actionneur électromécanique à électroaimants de commande d'une soupape,
la figure 2 représente le fonctionnement d'une unité de commande de soupapes à microprocesseur conforme à l'invention,
la figure 3 représente le couple fourni par un moteur en fonction du régime de ce dernier et de différents modes de fonctionnement conformes à l'invention,
la figure 4 représente des opérations d'activation et de désactivation de cylindres conformes à l'invention et déclenchées par des variations du régime du moteur,
la figure 5 représente des opérations d'activation et de désactivation de cylindres conformes à l'invention déclenchées par des variations du couple commandé au moteur,
les figures 6a, 6b et 6c représentent des tests de fonctionnement d'un moteur destinés à commander l'activation ou la désactivation de cylindres conformément à l'invention,
les figures 7a, 7b, 7c et 7d représentent des applications des tests d'activation ou de désactivation de cylindres décrits aux figures 6a, 6b ou 6c,
les figures 8a et 8b représentent les couples fournis par les cylindres d'un moteur conforme à l'invention lors d'une désactivation de cylindres,
la figure 8c représente des délais de fonctionnements considérés lors d'une désactivation,
la figure 8d représente l'évolution des couples fournis par les cylindres d'un moteur conforme à l'invention lors d'une activation de cylindres,
la figure 9 est un diagramme représentant le couple fourni par un moteur en fonction du régime de ce dernier et du nombre de soupapes d'admission activées pour chaque cylindre,
la figure 10 représente la chronologie d'une activation de soupape d'admission conformément à une première variante de l'invention,
la figure 11 représente une chronologie d'activation de soupape d'admission conformément à une deuxième variante de l'invention, et
la figure 12 est un diagramme représentant le couple fourni par un moteur en fonction du régime de ce dernier et d'un mode de commande utilisé pour chaque soupape.

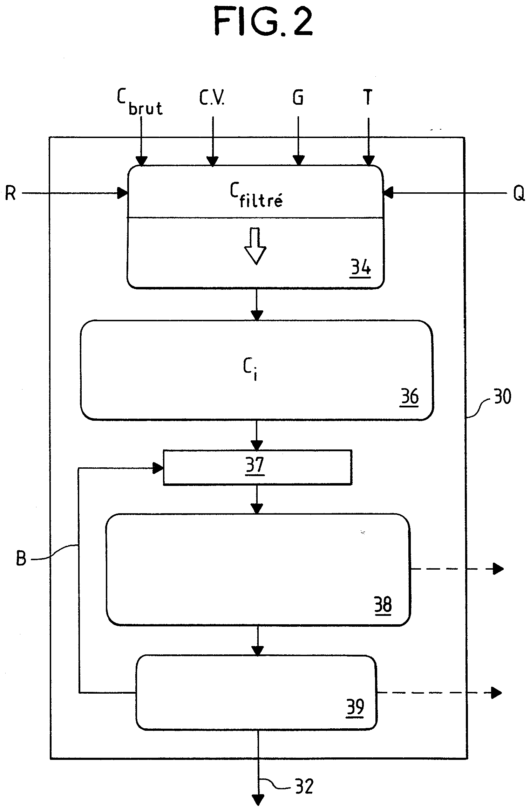

Dans la réalisation de l'invention décrite ci-dessous, une unité 30 de commande (figure 2) contrôle les actionneurs électromécaniques de soupapes d'un moteur (non représentés) de façon à optimiser la consommation de ce dernier en modifiant le nombre de cylindres actifs dans le moteur, c'est-à-dire générant un couple moteur.

Cette unité 30 est par ailleurs utilisée pour filtrer le couple brut commandé par le conducteur du véhicule, dénommé par la suite $C_{brut,}$ en un couple filtré, dénommé par la suite $C_{filtre}$ de façon à assurer un agrément de conduite limitant, par exemple, des variations de couple trop brusques.

A cet effet, cette unité 30 reçoit des informations C.V. concernant la conduite du véhicule, telles que le mode de conduite ou la vitesse du véhicule, et des informations concernant le fonctionnement du moteur, à savoir son régime R, le couple $C_{brut}$ commandé par le conducteur, la température T du système de refroidissement, la quantité Q de carburant injecté dans chaque cylindre et la richesse G moyenne des gaz d'échappement.

L'unité 30 commande alors les actionneurs électromécaniques de soupapes du moteur en accord avec une cartographie préalablement définie (par exemple de façon empirique) déterminant le nombre de cylindres actifs qui, en fonction de ces informations, optimisent la consommation de carburant du moteur.

Toutefois, si des précautions ne sont pas prises, ces commandes des actionneurs électromécaniques peuvent perturber le fonctionnement du moteur. Par exemple, un défaut de synchronisation dans le fonctionnement des soupapes de différents cylindres peut provoquer des vibrations des éléments du moteur (cylindre, vilebrequin, etc.) et/ou des discontinuités dans le couple fourni par le moteur. En outre, une désactivation de cylindre(s) peut provoquer un accroissement du temps de réponse à une demande d'accélération, ce qui serait dangereux, par exemple lors d'un dépassement.

Pour éviter ces perturbations, l'unité centrale 30 commande les actionneurs de soupapes désactivées, c'est-à-dire maintenues fermées, après avoir déterminé successivement trois modes distincts de fonctionnement du moteur décrits ci-dessous dans l'ordre de détermination:

- Le premier mode de fonctionnement est relatif au nombre de cylindres actifs, c'est-à-dire au nombre de cylindres délivrant un couple moteur. Dans la réalisation considérée en exemple, le moteur comprend quatre cylindres pouvant fonctionner selon un mode à quatre cylindres, les quatre cylindres fournissant un couple moteur, ou selon un mode à deux cylindres, seuls deux cylindres fournissant un couple moteur. Pour cela, les soupapes des cylindres actifs sont maintenues actives, c'est-à-dire commandées suivant le cycle à quatre temps déjà décrit, tandis que les soupapes des cylindres inactifs sont désactivées, c'est-à-dire maintenues en position fermée.

Dans cette réalisation, toutes les soupapes d'admission sont commandées au moyen d'actionneurs munis d'électroaimants, tel que l'actionneur représenté à la figure 1. De même, les soupapes d'échappement des cylindres 1 et 4 sont à commande électromécanique tandis que les soupapes d'échappement des cylindres 2 et 3 sont commandées au moyen d'actionneurs à butées hydrauliques débrayables.

- Le deuxième mode de fonctionnement est relatif au nombre et au type de soupapes d'admission actives dans chaque cylindre. En effet, dans cet exemple, chaque cylindre comprend deux soupapes d'admission pouvant être commandées indépendamment l'une de l'autre par deux actionneurs électromécaniques indépendants tels que décrits à la figure 1. On peut ainsi utiliser ou activer une ou deux soupapes d'admission par cylindre actif.

En outre, dans l'exemple, chacune de ces deux soupapes a des fonctions différentes: une soupape, dite paire, contrôle un conduit d'admission d'air, tandis que la deuxième soupape, dite impaire, contrôle un conduit d'admission d'air et de carburant.

- Le troisième mode de fonctionnement est relatif au mode de levée utilisé pour chaque soupape active. Dans cet exemple, on considère que les soupapes d'admission peuvent être commandées suivant un mode classique tel que les instants d'ouverture et de fermeture de ces soupapes sont déterminés et commandés, ou suivant un mode balistique tel que l'instant de fermeture d'une soupape n'est pas commandé mais déterminé par le temps nécessaire à celle-ci pour passer d'une position fermée à la position ouverte puis, sans arrêt, revenir à la position fermée. En d'autres termes, le mode classique utilise une commande d'ouverture et une commande de fermeture de soupape tandis que le mode balistique n'utilise qu'une commande d'ouverture.

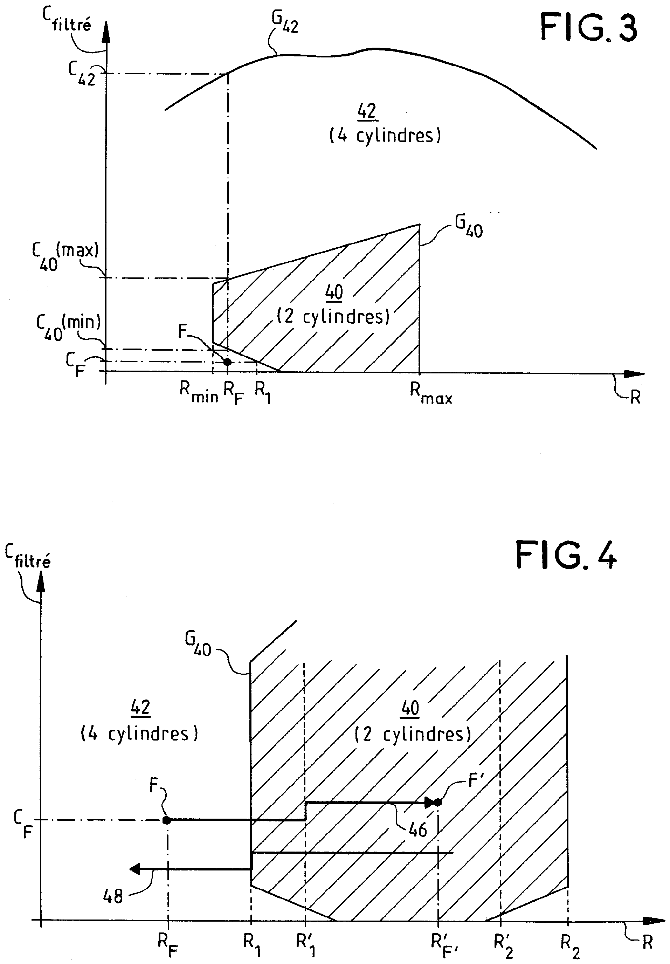

Cette succession de choix de modes de fonctionnement est représentée par des blocs 34, 38 et 39, les moyens permettant d'effectuer ces choix étant décrits en détail ultérieurement à l'aide des figures 3 à 12. A la suite de ces choix, un signal 32 est émis par l'unité 30 pour commander chaque actionneur conformément à ces choix.

Dans un premier temps, pour déterminer le premier mode de fonctionnement, c'est-à-dire le nombre de cylindres actifs, l'unité 30 est informée des paramètres déjà indiqués à savoir le couple $C_{brut}$ commandé au moteur, le régime R de ce dernier, la température T de l'eau de refroidissement, la quantité Q de carburant injecté dans le cylindre, des informations C.V. propres à la conduite du véhicule et la richesse G moyenne des gaz d'échappement.

A la suite de cette acquisition de données, le filtrage du couple $C_{brut}$ commandé par le conducteur du véhicule en un couple $C_{filtre}$ réellement commandé au moteur est effectué, puis le choix d'un mode à deux ou quatre cylindres est opéré (bloc 34).

Dans un deuxième temps, lorsqu'un mode à deux ou quatre cylindres est choisi, on détermine (bloc 36) le couple $C_i$ devant être délivré par chaque cylindre (i) maintenu actif de façon à éviter des discontinuités dans le couple délivré par le moteur lors du changement de mode.

Lorsque le couple $C_i$ est déterminé, cette donnée est transmise (bloc 37), puis on détermine pour chaque cylindre actif, le nombre et le type de soupapes d'admission actives (bloc 38) et le mode de levée classique ou balistique utilisé pour chaque soupape maintenue active (bloc 39) dans le cylindre i considéré. Ces déterminations sont effectuées à chaque appel de la fonction contrôle du moteur, c'est-à-dire à chaque demi-tour du moteur. De façon plus précise les diverses consignes sont déterminées une fois par cycle de chaque cylindre. Comme le moteur dispose de quatre cylindres et un cycle dure deux tours moteur, la détermination pour chaque cylindre correspond donc à une durée d'un demi-tour moteur.

La boucle B montrée sur la figure 2 représente la mise à jour permanente des déterminations des divers modes.

Les choix des modes de fonctionnement (blocs 34, 38 et 39) utilisent des données établies à l'aide de tests préalables du moteur permettant d'établir, par exemple, les courbes représentées sur la figure 3.

Sur cette figure 3 on a porté en abscisses le régime R du moteur (en tours/min) et en ordonnées le couple $C_{filtre}$ commandé au moteur (en N.m.). Des courbes $G_{40}$ et $G_{42}$ délimitent, respectivement, des zones 40 et 42 de fonctionnement du moteur testé en mode deux cylindres (zone 40) ou en mode quatre cylindres (zone 42).

En d'autres termes, le moteur testé peut délivrer un couple $C_F$ à un régime $R_F$ si le point F de fonctionnement d'abscisse $C_F$ et d'ordonnée $R_F$ se situe dans une zone correspondant à ce mode. Ainsi, le point F de fonctionnement représenté sur la figure 3 est situé dans la zone 42 et seul le mode à quatre cylindres délivre le couple $C_F$ et le régime $R_F$ requis.

A partir de la figure 3 sont déterminées les limites du mode deux cylindres et du mode quatre cylindres en termes de régime et de couple du moteur. Lorsque le régime R est inférieur au régime $R_{min}$ minimal du mode à deux cylindres, ou supérieur au régime $R_{max}$ maximal de ce mode à deux cylindres, seul le mode quatre cylindres peut être utilisé par le moteur.

De même, le régime $R_F$ du moteur étant donné, le mode à quatre cylindres est limité à un couple maximal $C_{42}$ tandis que le mode à deux cylindres est limité à un couple maximal $C_{40}(max)$ ou minimal $C_{40}(min)$.

De façon analogue, les limites en régime de chaque mode de fonctionnement peuvent être établies pour un couple déterminé. Par exemple, un couple $C_F$ étant fixé pour le moteur, le mode deux cylindres présente un régime $R_1$ minimal au dessous duquel le mode à deux cylindres ne peut être utilisé, de même qu'un régime $R_{max}$ maximal au-delà duquel le mode deux cylindres ne peut être utilisé.

Dans la suite du document, on admettra que le mode à deux cylindres est plus économique, à couple et régime égaux, que le mode à quatre cylindres. Ainsi, lorsque le moteur fonctionne à un point de fonctionnement situé dans la zone 40, le mode à deux cylindres est préférable.

Lorsque le point F de fonctionnement du moteur est proche de la zone 40, des changements de modes répétés peuvent se produire si ce point F varie entre les zones 40 et 42 et si la courbe G40 était utilisée comme le seuil de déclenchement de chaque mode. Par exemple, une légère augmentation du régime R du moteur depuis $R_F$ jusqu'à une valeur supérieure à $R_1$ entraînerait le déclenchement du mode à deux cylindres, et une légère baisse ultérieure de ce régime au-dessous du régime $R_1$, entraînerait un retour au mode à quatre cylindres.

De tels changements de mode, répétés avec une fréquence élevée, perturberaient sensiblement la conduite du véhicule. Pour éviter ces perturbations, le changement du nombre de cylindres actifs utilise deux stratégies de stabilisation considérant, respectivement, un changement dû à une variation du régime R ou un changement dû à une variation du couple $C_{filtre}$ commandé au moteur.

Dans le cas où une variation de régime R est considérée, un premier régime seuil $R_1$ de déclenchement du mode à quatre cylindres et un deuxième régime seuil $R_1'$ de déclenchement du mode à deux cylindres, distinct du premier, sont utilisés pour définir une plage de stabilité entre ces seuils comme représenté sur la figure 4, qui est un agrandissement d'une partie de la figure 3 sur laquelle sont représentées les zones 42 (mode à quatre cylindres) et 40 (mode à deux cylindres), ainsi que la courbe $G_{40}$.

On a aussi représenté un point F de fonctionnement situé dans la zone 42, le moteur étant alors en mode à quatre cylindres. Lorsque son régime R augmente et passe dans la zone 40 (flèche 46), le mode à deux cylindres n'est établi que lorsque le régime R atteint un seuil $R'_1$ de déclenchement du mode à deux cylindres supérieur au régime $R_1$ de la courbe $G_{40}$ précédemment déterminée (figure 3). En d'autres termes, sur la plage de régime $[R_1 ; R'_1]$, le mode à quatre cylindres est imposé alors même que le mode à deux cylindres serait plus économe.

On considère par la suite que, le mode à deux cylindres étant établi, le moteur se stabilise et opère à un point de fonctionnement F' de régime $R'_F$ supérieur à $R'_1$. Dès lors, une diminution du régime du moteur à partir de la valeur $R'_F$• (flèche 48) ne déclenche le mode à quatre cylindres que lorsque ce régime devient inférieur au seuil $R_1$ de déclenchement de ce mode.

L'exemple décrit ci-dessus est relatif à un passage du mode à quatre cylindres vers un mode à deux cylindres déclenché par une augmentation du régime, et à un passage du mode à deux cylindres vers le mode à quatre cylindres déclenché par diminution du régime. De façon similaire à cet exemple, le passage d'un mode à quatre cylindres vers un mode à deux cylindres déclenché par une diminution de régime, et le passage d'un mode à deux cylindres vers un mode à quatre cylindres déclenché par une augmentation de régime utilise un seuil $R_2$ (figure 4) de déclenchement du mode à quatre cylindres et un seuil $R'_2$ de déclenchement du mode à deux cylindres de façon à définir une plage $[R'_2 ; R_2]$ de stabilité.

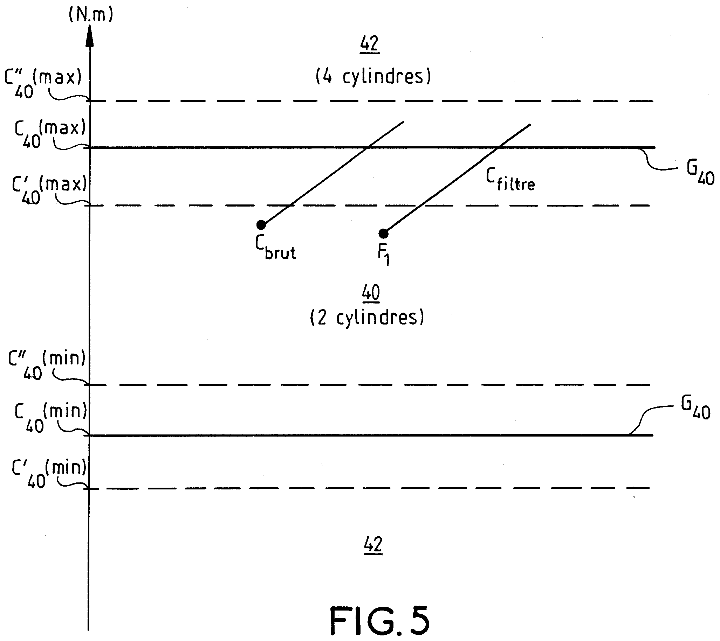

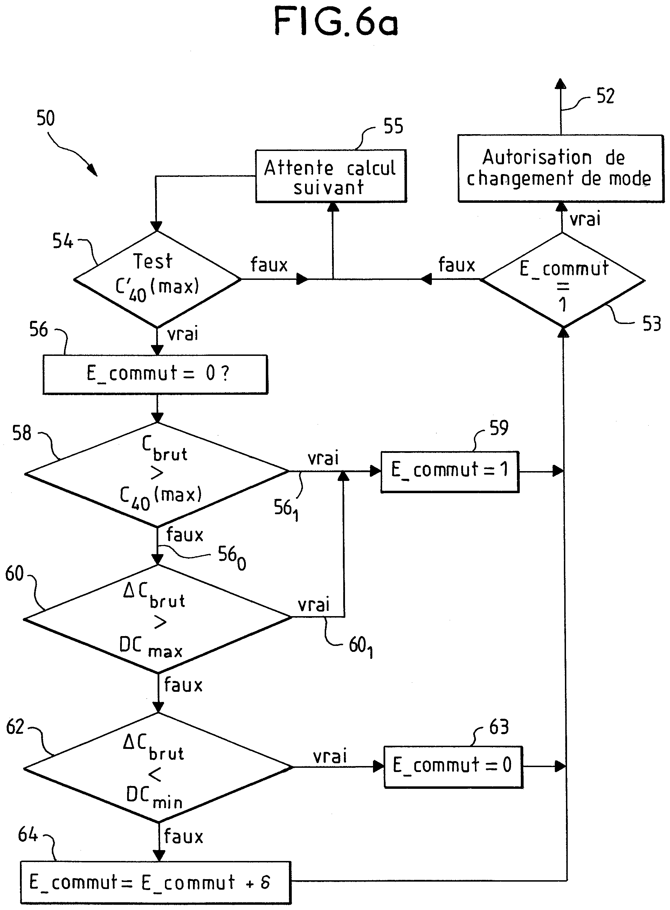

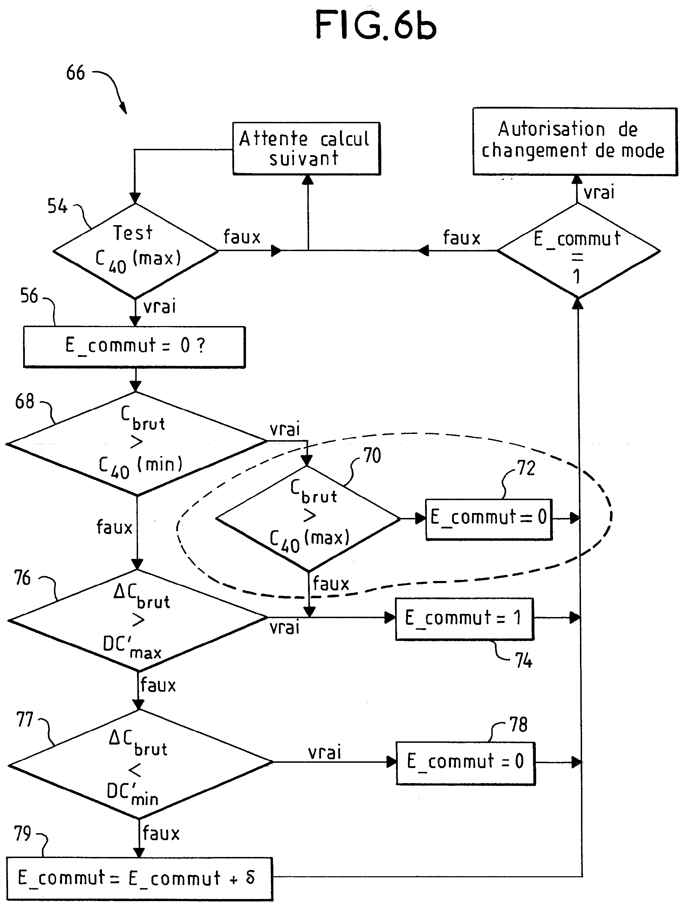

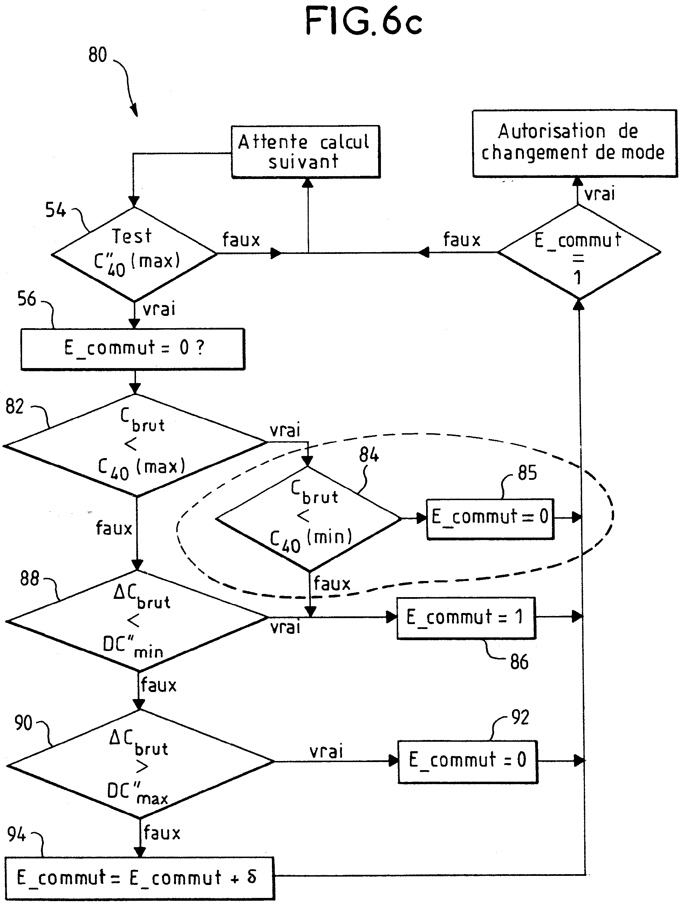

Dans le cas où le changement du nombre de cylindres actifs est dû à une variation du couple $C_{filtre}$ requis au moteur, la stratégie de stabilisation prend aussi en compte la valeur et les variations du couple $Ci_{me}$ commandé par l'utilisateur comme décrit ci-dessous à l'aide des figure 5, 6a, 6b et 6c.

Sur la figure 5 est représentée une partie de la figure 3 comprenant les couples maximal $C_{40}(max)$ et minimal $C_{40}(min)$ du mode à deux cylindres issus de la courbe $G_{40}$ (figure 3), ces couples $C_{40}(max)$ et $C_{40}$ (min) étant utilisés (et dénommés) par la suite comme seuils de déclenchement. Des variations des couples filtrés (courbe $C_{filtre}$) et brut (courbe $C_{Brut}$) sont aussi représentées.

On observe qu'une augmentation du couple $C_{brut}$ génère une augmentation du couple $C_{filtre}$ avec un retard dû au filtrage 15 effectué par l'unité 30 (figure 3) comme précédemment décrit.

Initialement, le moteur fonctionne suivant un mode à deux cylindres, son point $F_1$ de fonctionnement correspondant à un couple inférieur au seuil $C_{40}$ de déclenchement. Lorsque le couple $C_{filtre}$ augmente et atteint un seuil $C'_{40}(max)$ de test inférieur au couple $C_{40}(max)$, la valeur du couple $C_{Brut}$ est considérée pour déterminer si le mode à quatre cylindres doit être déclenché. Dans ce cas, si la valeur du couple $C_{Brut}$ a atteint la valeur du couple $C_{40}(max)$ de déclenchement, le mode à quatre cylindres est déclenché.

Un tel seuil $C'_{40}(max)$ de test est utilisé pour prendre en compte les variations du couple $C_{brut}$ et déclencher un changement de mode avant que le couple $C_{filtre}$ n'atteigne le seuil $C_{40}(max)$ de déclenchement. Une telle utilisation permet de considérer des situations telles que lorsqu'une augmentation importante de couple $C_{brut}$ est requise pour effectuer un dépassement et que le moteur fonctionne selon le mode à deux cylindres.

Dans ce cas, il convient de déclencher le mode à quatre cylindres avant que le seuil $C_{40}(max)$ de déclenchement de ce mode soit atteint par le couple $C_{filtre}$ requis de façon à permettre l'augmentation de couple requise.

De façon analogue au couple $C'_{40}(max)$, des couples $C'_{40}(min)$, $C''_{40}(max)$ et $C''_{40}(min)$ de test sont utilisés dans les cas où l'on considère, respectivement, un déclenchement du mode à deux cylindres par augmentation du couple requis, un déclenchement du mode à deux cylindres par une diminution du couple requis et un déclenchement du mode à quatre cylindres par une diminution du couple requis. Par exemple, si le couple $C_{filtre}$ atteint le seuil $C''_{40}(min)$ de test tandis que le couple $C_{brut}$ atteint le seuil $C_{40}(min)$, le mode à quatre cylindres est déclenché.

Suivant une situation particulière, lorsque les couples $C_{filtre}$ et $C_{brut}$ varient fortement, le moteur fonctionnant selon un mode à quatre cylindres, et que, le couple $C_{filtre}$ se situant dans une zone de fonctionnement à deux cylindres, le couple $C_{brut}$ traverse cette zone et se situe dans une zone à quatre cylindres, il convient de maintenir le mode à quatre cylindres malgré la présence du couple $C_{filtre}$ dans la zone à deux cylindres.

Par ailleurs, il convient de déclencher un premier mode lorsque, le moteur fonctionnant suivant un deuxième mode, le couple requis $C_{brut}$ varie fortement de façon à anticiper le déclenchement du premier mode.

A cet effet, on définit des seuils maximal et minimal de variation $\Delta C_{brut}$ du couple $C_{brut}$ utilisés dans les quatre cas possibles de changement de modes, à savoir:

a) le passage d'un mode à deux cylindres vers un mode à quatre cylindres lorsque le couple augmente,
b) le passage d'un mode à deux cylindres vers un mode à quatre cylindres lorsque le couple diminue,
c) le passage d'un mode à quatre cylindres vers un mode à deux cylindres lorsque le couple augmente, et
a) le passage d'un mode à quatre cylindres vers un mode à deux cylindres lorsque le couple diminue.

Le premier cas (a) et le troisième cas (c) sont analogues puisqu'une augmentation $\Delta C_{brut}$ du couple est considérée.

De fait, dans ces deux cas (a) et (c), le moteur change de mode si, le couple $C_{filtre}$ ayant atteint un seuil de test, la variation de couple est supérieure au seuil maximal considéré. Dans ces deux cas, $\Delta C_{brut}$ est positif ainsi que les seuils maximal et minimal considérés.

Si l'augmentation $\Delta C_{brut}$ de couple est inférieure au seuil maximal, la valeur de cette augmentation est comparée à un seuil minimal tel que, si cette augmentation $\Delta C_{brut}$ est inférieure au seuil minimal, elle est considérée comme faible et aucun changement de mode n'est effectué.

Inversement, lorsque cette augmentation $\Delta C_{brut}$ est comprise entre le seuil maximal et le seuil minimal, cette variation est mémorisée pour déclencher le changement de mode indépendamment de la valeur de $C_{brut}$ si cette variation se maintient. On anticipe ainsi le déclenchement d'un mode en extrapolant la variation du couple mémorisée de façon continue.

Le second cas (b) et le quatrième cas (d) sont analogues en ce que, une diminution $\Delta C_{brut}$ du couple $C_{brut}$ étant considérée, le moteur change de mode si, le couple $C_{filtre}$ ayant atteint un seuil de test, la variation de couple est inférieure à un seuil minimal considéré. Dans ces deux cas, $\Delta C_{brut}$ est négatif ainsi que les seuils maximal et minimal. Une variation de couple inférieure à un seuil signifie qu'en valeur absolue cette variation est supérieure à la valeur absolue du seuil.

Si cette diminution $\Delta C_{brut}$ de couple est supérieure au seuil minimal, cette variation est comparée à un seuil maximal tel que, si cette diminution $\Delta C_{brut}$ est supérieure au seuil minimal, elle est considérée comme faible et aucun changement de mode n'est effectué.

Inversement, si cette augmentation $\Delta C_{brut}$ est comprise entre le seuil minimal et le seuil maximal, cette variation est mémorisée pour déclencher le changement de mode lorsqu'elle se maintient. On anticipe ainsi le déclenchement d'un mode en extrapolant la variation du couple mémorisée de façon continue.

Afin d'illustrer ces modes de fonctionnement on décrit tout d'abord un exemple relatif au cas a), c'est-à-dire relatif au changement d'un mode à deux cylindres vers un mode à quatre cylindres lors d'une augmentation de couple.

Dans cet exemple on fait appelle à un test 50 représenté sur la figure 6a qui comprend une suite d'opérations effectuées tous les demi-tours moteur afin de déterminer le déclenchement éventuel du mode à quatre cylindres à la suite d'une augmentation de couple.

Ce test 50 utilise une variable $E_{commut}$, dont la valeur varie entre zéro et un, et est telle qu'une commande 52 d'application du mode à quatre cylindres est transmise au moteur si un test (bloc 53) détecte que cette variable $E_{commut}$ est égale à un. Autrement, le mode à deux cylindres est maintenu.

Lors d'une première opération, l'unité centrale teste (bloc 54) les conditions de fonctionnement du moteur et du véhicule. En effet, dans la réalisation décrite, le mode à quatre cylindres est immédiatement imposé lorsque le moteur fonctionne en mode dit « vanné » (c'est-à-dire lorsque le remplissage en air du moteur est contrôlé mécaniquement par un papillon), lorsque le moteur est débrayé, aucun rapport de la boîte de vitesse n'étant engagé, lorsque le moteur fonctionne au ralenti et/ou lorsque le conducteur n'appuie pas sur l'accélérateur.

L'unité centrale teste aussi si le couple $C_{filtre}$ a atteint le seuil $C'_{40}(max)$ de test considéré dans ce cas. Si tel n'est pas le cas, on attend (bloc 55) un demi-tour moteur avant 30 de redémarrer le test (bloc 54).

Autrement, si le couple $C_{filtre}$ est supérieur au couple $C'_{40}(max)$ de test, on impose la valeur 0 à la variable $E_{commut}$ (bloc 56) si le couple $C_{filtre}$ atteint le couple seuil $C'_{40}(max)$ de test préalablement au déroulement de ce test 50.

Inversement, si ce seuil $C'_{40}(max)$ a été franchi lors d'un test précédent 50, la variable $E_{commut}$ est maintenue à sa valeur déterminée en fin de ce test précédent.

Ensuite, la valeur du couple $C_{brut}$ est comparée au couple $C_{40}(max)$ de déclenchement (bloc 58).

Si le couple $C_{brut}$ est supérieur au couple $C_{40}(max)$, le mode à quatre cylindres est déclenché par l'émission d'un signal $56_1$ entraînant la variation (bloc 59) de la variable Est de la valeur 0 à la valeur 1.

Si le couple $C_{brut}$ requis est inférieur à $C_{40}(max)$, le contrôleur émet un signal 56o afin d'évaluer la variation $\Delta C_{brut}$ du couple $C_{brut}$ par rapport aux valeurs seuils $DC_{max}$ maximal et $DC_{min}$, minimal utilisés dans ce test. Pour déterminer $\Delta C_{brut}$, le couple $C_{brut}(t-1)$ requis à l'instant (t-1) est soustrait au couple $C_{brut}$ requis à l'instant t, t étant une variable associée au temps $\Delta C_{brut} = (C_{brut}(t)- C_{brut}(t-1))$. L'écart entre t et t-1 correspond au temps écoulé entre deux appels successifs de la fonction contrôle moteur, c'est-à-dire au temps écoulé pendant un demi-tour moteur (ce temps dépend donc du régime du moteur).

Si la variation $\Delta C_{brut}$ est supérieure à $DC_{max}$ un signal $60_1$ entraîne la variation de la variable $E_{commut}$ vers la valeur 1, le mode à quatre cylindres étant imposé au moteur. Ce test est représenté par le bloc 60.

Si la variation $\Delta C_{brut}$ est inférieure ou égale à $DC_{max}$ cette variation $\Delta C_{brut}$ est comparée au seuil minimal $DC_{min}$ (bloc 62). Lorsque la variation $\Delta C_{brut}$ est inférieure à $DC_{min}$, cette variation $\Delta C_{brut}$ n'est pas prise en compte et on maintient (bloc 63) la variable $E_{commut}$ à zéro tandis qu'un nouveau cycle de calcul est effectué.

Lorsque $\Delta C_{brut}$ est supérieure à $DC_{min}$, on modifie $E_{commut}$ en $E_{commut}+ \delta$, $\delta$ étant constant, cette nouvelle valeur de $E_{commut}$ étant mémorisée après avoir vérifié (bloc 53) qu'elle n'atteignait pas un, auquel cas le mode à quatre cylindres est déclenché.

Pour le passage d'un mode à deux cylindres vers un mode à quatre cylindres lorsque le couple diminue (cas (b) mentionné ci-dessus) le procédé se déduit de celui décrit en relation avec la figure 6a avec cependant les modifications suivantes :

- le test 54 compare le couple $C_{filtre}$ avec un seuil $C''_{40}(min)$ de test (figure 5) supérieur à $C_{40}(min)$ pour déterminer si le test doit être effectué,
- le test 58 utilise le seuil $C_{40}(min)$ de telle sorte que, si le couple $C_{brut}$ requis est inférieur à ce seuil $C_{40}(min)$, le mode à quatre cylindres est déclenché,
- le test 60 compare la variation $\Delta C_{brut}$ à un seuil minimal de telle sorte que, si cette variation $\Delta C_{brut}$ est inférieure à ce seuil minimal, le mode à quatre cylindres est déclenché, et

le test 62 compare la variation $\Delta C_{brut}$ à un seuil maximal de telle sorte que, si $\Delta C_{brut}$ est supérieur à ce seuil maximal, cette variation n'est pas considérée tandis que, si $\Delta C_{brut}$ est comprise entre le seuil maximal et le seuil minimal, la variable $E_{commut}$ est modifiée en $E_{commut}$ plus $\delta$.

Lorsque le moteur fonctionne en mode à quatre cylindres, des cycles 66 (figure 6b) et 80 (figure 6c) de tests, analogues au cycle 50, sont effectués par l'unité 30 pour contrôler l'éventuel déclenchement du mode à deux cylindres, le cycle 66, respectivement le cycle 80, étant considéré lorsque le déclenchement d'un mode à deux cylindres est dû à une augmentation de couple, respectivement à une diminution de couple.

En d'autres termes, la figure 6b est un organigramme qui correspond au cas c), c'est-à-dire au passage d'un mode à quatre cylindres vers un mode à deux cylindres lorsque le couple augmente.

Le cycle 66 de test comprend des opérations déjà décrites telles que le test (bloc 54) des conditions de fonctionnement du véhicule et la mise à zéro de la variable $E_{commut}$ (bloc 56) si le seuil de test ($C'_{40}(min)$) considéré est franchi lors de l'exécution de ce test.

Par la suite, un test (bloc 68) compare le couple $C_{brut}$ demandé au seuil $C_{40}(min)$ de déclenchement du mode à deux cylindres. Si le couple $C_{brut}$ est supérieur au seuil $C_{40}(min)$ de déclenchement, le mode à deux cylindres est établi.

Toutefois, si le couple $C_{brut}$ augmente fortement, cette augmentation peut entraîner le déclenchement du mode à quatre cylindres peu après sa désactivation. En d'autres termes, cette augmentation de couple peut être telle que le point de fonctionnement du moteur va rapidement traverser la zone 40 du mode à deux cylindres et se situer à nouveau dans la zone 42 du mode à quatre cylindres. Dans ce cas, le déclenchement du mode à deux cylindres doit être évité.

C'est pourquoi, on utilise le couple $C_{40}(max)$ de déclenchement pour effectuer un test (bloc 70) comparant le couple $C_{brut}$ à ce couple $C_{40}(max)$. Si ce dernier est inférieur au couple $C_{brut}$, on considère que le couple $C_{brut}$ augmente de façon suffisamment importante pour que le déclenchement du mode à deux cylindres soit empêché par un maintien (bloc 72) de $E_{commut}$ à zéro. Par contre, si $C_{brut}$ est inférieur à $C_{40}(max)$, le changement de mode s'effectue par un maintien (bloc 74) de $E_{commut}$ à 1.

Dans le cas où le couple $C_{brut}$ est inférieur à $C_{40}(min)$ la variation $\Delta C_{brut}$ de ce couple est comparée à deux valeurs seuils $DC'_{max}$ (bloc 76) maximal et $DC'_{min}$, minimal. Ainsi, si la variation $\Delta C_{brut}$ est supérieure à $DC'_{max}$ , le mode à deux cylindres est déclenché (bloc 74).

Au contraire, si $\Delta C_{brut}$ est inférieure à $DC'_{max}$, la variation $\Delta C_{brut}$ est comparée à $DC'_{min}$ de telle sorte que, si elle est inférieure à $DC'_{min}$, la valeur de $E_{commut}$ est maintenue à zéro (bloc 78) pour empêcher un changement de mode, ou si elle est supérieure à $DC'_{min}$, la valeur de $E_{commut}$ est établie à $E_{commut} + \delta$ (bloc 79) de façon à anticiper un changement de mode comme précédemment décrit.

On va maintenant décrire avec la figure 6c le cas d) à savoir un changement du mode à quatre cylindres vers un mode deux cylindres dû à une diminution du couple demandé.

Ainsi, sur la figure 6c est représenté un cycle 80 de tests relatifs à un changement du mode à quatre cylindres vers le mode à deux cylindres dû à une diminution du couple demandé. Ce cycle comprend les opérations 54 et 56 déjà décrites, le couple $C_{40}"(max)$ étant utilisé comme couple de test. Lorsque le couple $C_{filtre}$ atteint ce couple $C_{40}"(max)$, un test 82 compare le couple $C_{brut}$ au couple $C_{40}(max)$ de déclenchement du mode à deux cylindres tel que décrit à la figure 3.

De façon analogue à l'opération 70 du test 66, si le couple $C_{brut}$ est inférieur à ce seuil $C_{40}(max)$, un test (bloc 84) compare la valeur du couple $C_{brut}$ par rapport au couple seuil $C_{40}(min)$ pour déterminer si le couple $C_{brut}$ ne décroît pas rapidement, auquel cas un déclenchement du mode à deux cylindres serait rapidement suivi par un déclenchement du mode à quatre cylindres.

Tel est le cas si le couple $C_{brut}$ est inférieur au seuil $C_{40}(min)$, auquel cas le déclenchement du mode à deux cylindres est empêché en maintenant la variable $E_{commut}$ à zéro (bloc 85).

Inversement, lorsque $C_{brut}$ est supérieur à $C_{40}(min)$, la variable de basculement $E_{commut}$ est forcée à 1 (bloc 86) pour entraîner le déclenchement du mode à deux cylindres.

Lorsque le couple $C_{brut}$ n'est pas inférieur à $C_{40}(max)$, des tests 88 et 90 comparent la variation $\Delta C_{brut}$ du couple demandé par rapport à deux valeurs seuils $DC"_{max}$ maximal et $DC"_{min}$ minimal, de façon à déclencher l'activation du mode à deux cylindres si cette variation $\Delta C_{brut}$ est inférieure à $DC"_{max}$ (bloc 88) ou, le cas échéant, modifier la valeur de $E_{commut}$ si cette variation est inférieure à $DC"_{min}$.

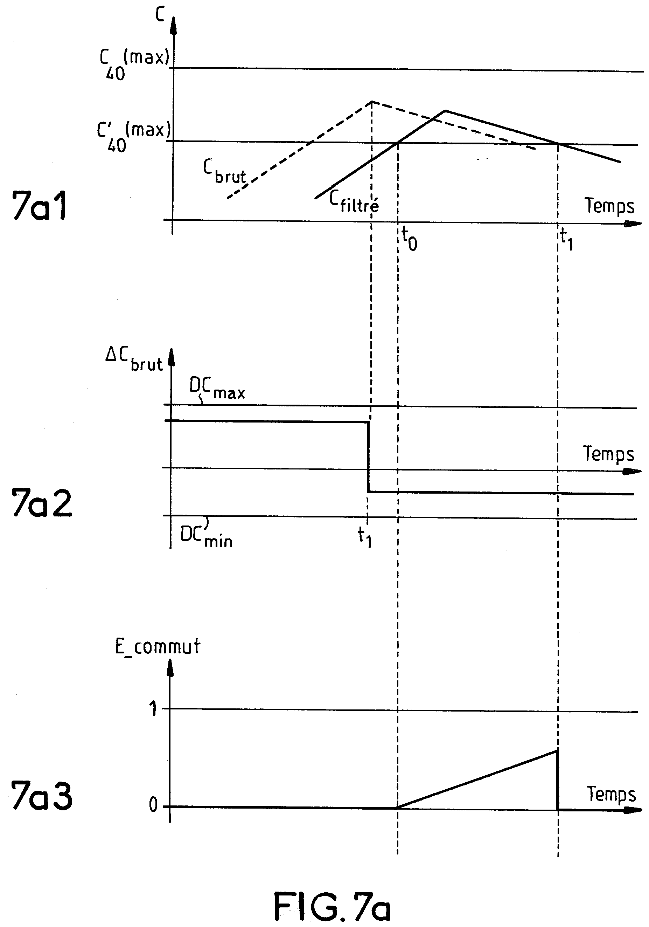

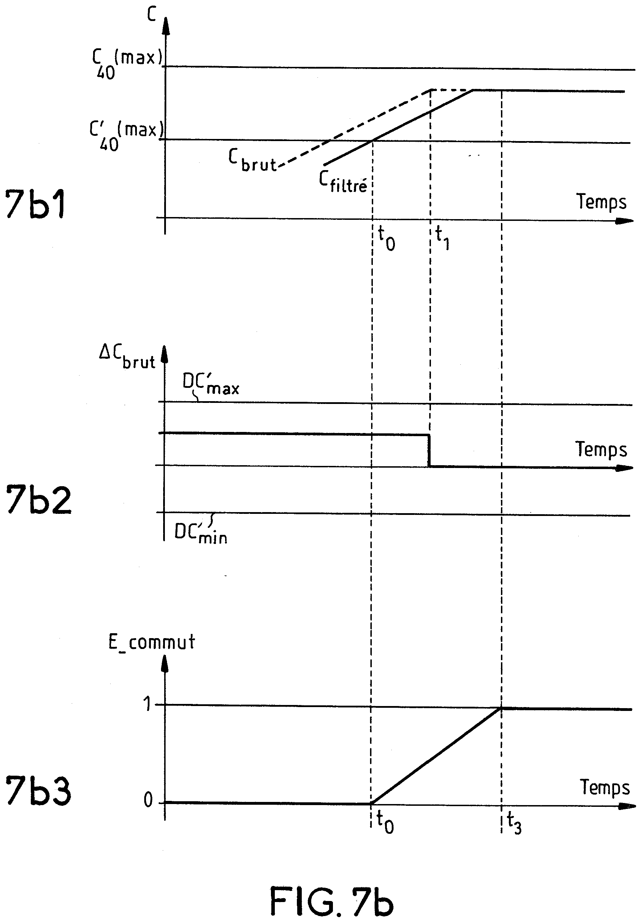

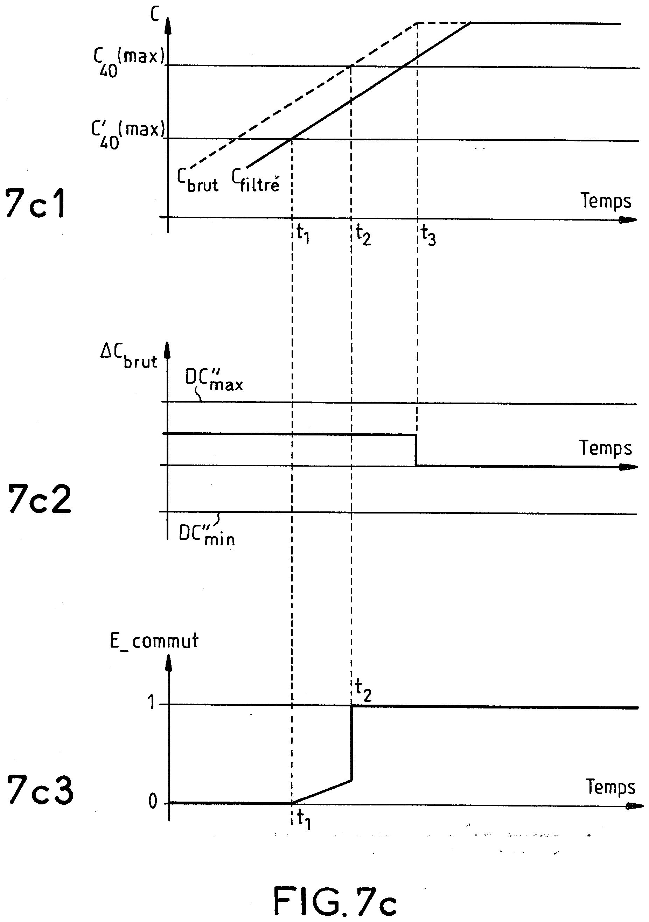

Sur les figures 7a, 7b et 7c sont représentés des exemples de variations de couple $C_{brut}$ et $C_{filtre}$ auxquelles sont appliquées les cycles de tests précédemment décrits.

La figure 7a est formée de trois diagrammes 7a.1, 7a.2 et 7a.3, le diagramme 7a.1 représentant un exemple de variation des couples $C_{brut}$ et $C_{filtre}$ (en ordonnées, en N.m) en fonction d'un axe chronologique (en abscisse). Selon cet exemple, le moteur fonctionne selon un mode à deux cylindres lorsque le couple $C_{filtre}$ dépasse le seuil $C'_{40}(max)$ de test à un instant $t_0$, le couple $C_{brut}$ étant alors compris entre le couple $C'_{40}(max)$ et $C_{40}(max)$ et sa variation $\Delta C_{brut}$ étant comprise entre $DC_{max}$ et $DC_{min}$ (diagramme 7a.2).

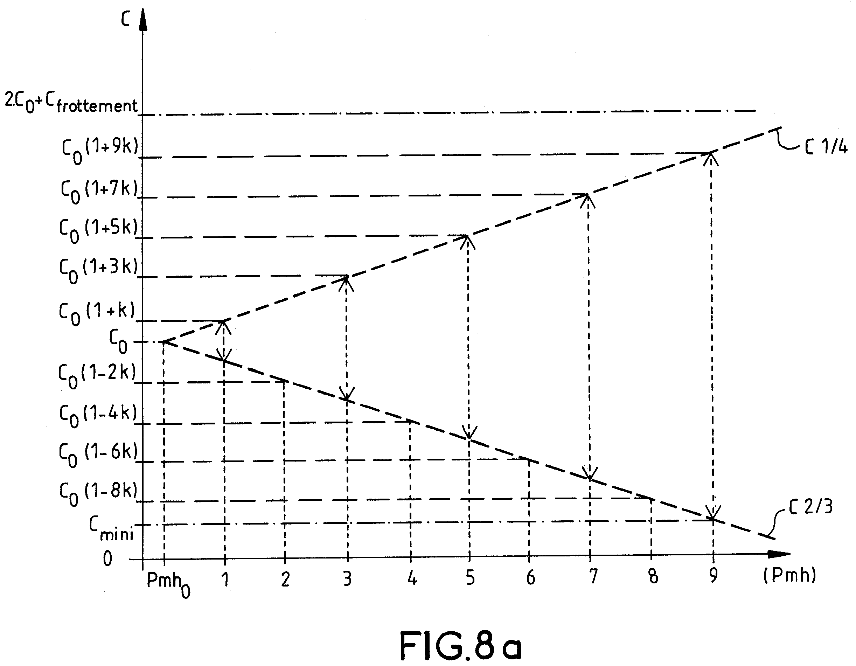

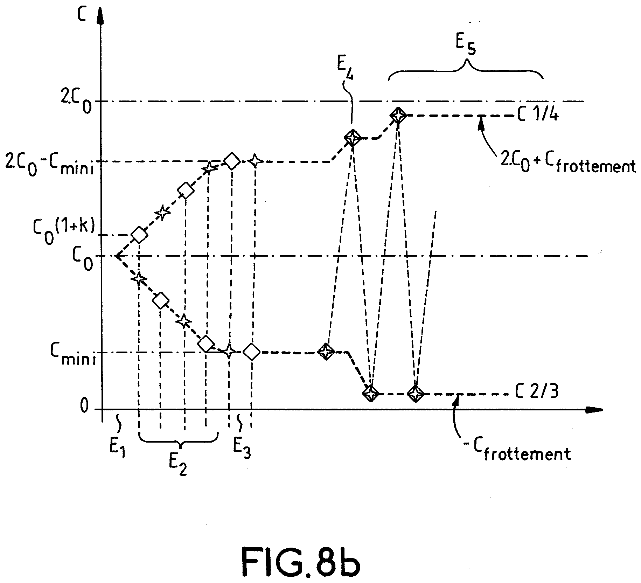

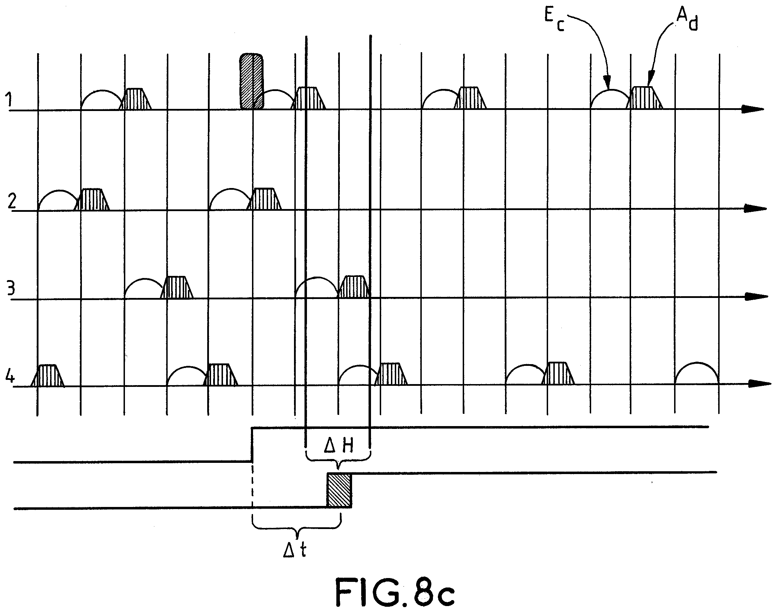

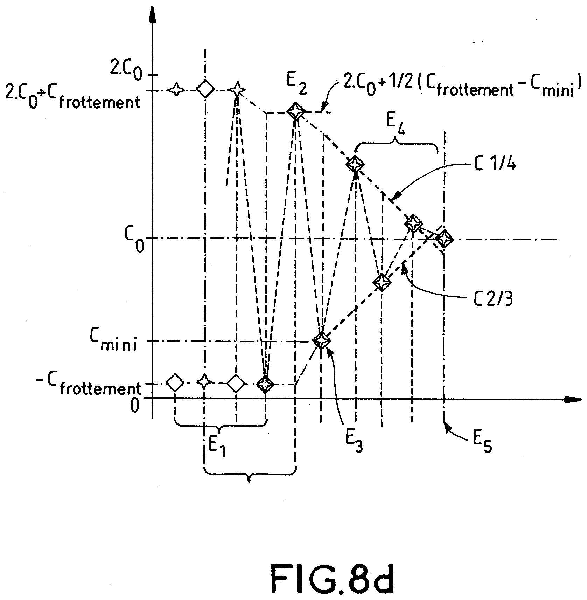

Dès lors, à cet instant $t_0$, la variable $E_{commut}$ augmente de façon constante en fonction du temps d'un indice 5 (figure 8) conformément à l'opération représenté par le bloc 64 du test 50 (figure 6a).

Cette augmentation de la variable $E_{commut}$ s'achève lorsque le couple $C_{Filtre}$ diminue en deçà du seuil $C'_{40}$, à l'instant $t_1$ (conformément au test 54 de la figure 6a). A cet instant, la variable $E_{commut}$ est égalée à zéro. Au cours de sa variation, la variable $E_{commut}$ n'a pas atteint la valeur de un et le mode à deux cylindres est maintenu.

Sur la figure 7b on considère un deuxième exemple de variations des couples $C_{brut}$ et $C_{Filtre}$ (diagramme 7b.1) telles qu'à l'instant to où le couple $C_{Filtre}$ a une valeur supérieure au couple seuil $C'_{40}(max)$, le couple $C_{brut}$ augmente, avec une variation $\Delta C_{brut}$ comprise entre $DC_{max}$ et $DC_{min}$, jusqu'à un instant $t_1$. Par la suite, le couple $C_{brut}$ se stabilise, la variation $\Delta C_{brut}$ devenant nulle.

La variation $\Delta C_{brut}$ étant comprise entre $DC_{max}$ et $DC_{min}$ à partir de l'instant $t_0$ (diagramme 7b.2), la variable $E_{commut}$ s'accroît d'une valeur $\delta$ à partir de cet instant $t_0$ jusqu'à atteindre la valeur de 1 à un instant $t_3$ où le mode à quatre cylindres est déclenché.

Sur la figure 7c est représenté un troisième exemple de variation des couples $_{Cbrut}$ et $_{Cfiltre}$ (diagramme 7c.1) tel que le couple $C_{filtre}$ atteint le couple seuil $C'_{40}(max)$ à l'instant $t_1$ et le couple seuil $C_{40}(max)$ à un instant $t_3$. Au cours de la période comprise entre ces deux instants t1 et t3, le couple $C_{brut}$ augmente avec une variation $\Delta C_{brut}$ comprise entre $DC_{max}$ et $DC_{min}$, de telle sorte que la variable $E_{commut}$ augmente avec un pas constant de $\delta$ à partir de cet instant $t_1$.

Toutefois, à un instant $t_2$ compris entre $t_1$ et $t_3$, le couple $C_{brut}$ atteint le couple seuil $C_{40}(max)$ de telle sorte que la variable $E_{commut}$ est immédiatement mise à 1 (bloc 59 de la figure 6a), le mode à quatre cylindres étant déclenché.

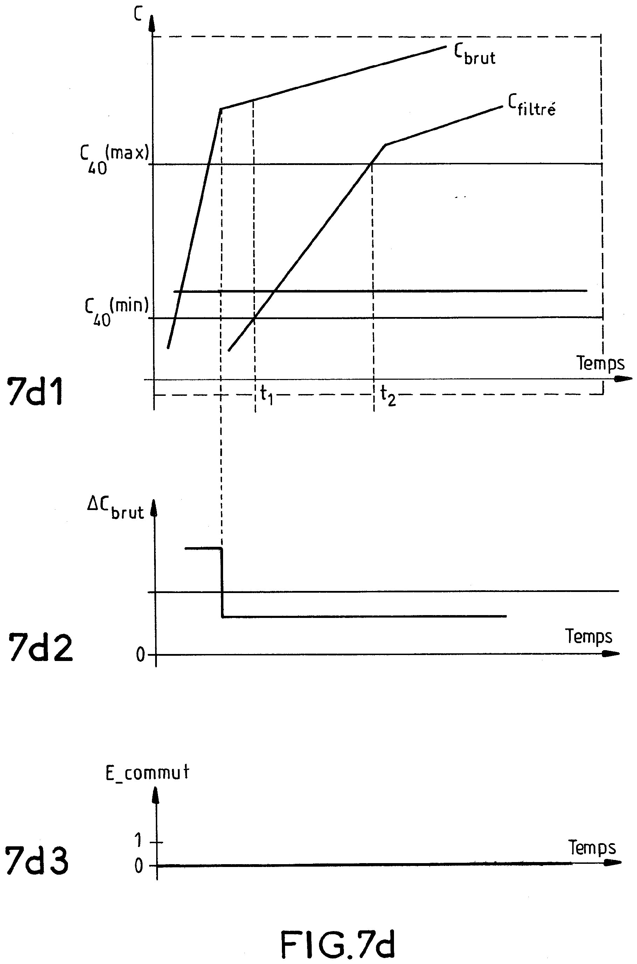

Sur la figure 7d est représenté un dernier exemple de variation des couples $C_{brut}$ et $C_{filtre}$, cet exemple utilisant le cycle de tests décrit à l'aide de la figure 6b. Dans cet exemple, le couple $C_{filtre}$ atteint le couple $C_{40}(min)$ à un instant $t_1$ et le couple $C_{40}(max)$ à un instant $t_2$.

Toutefois, la variation du couple $C_{brut}$ est telle qu'à l'instant t, le couple $C_{brut}$ est supérieur au couple $C_{40}(max)$ de déclenchement.

Dès lors, la variable $E_{commut}$ est maintenue à zéro et le mode à quatre cylindres est maintenu tout au long de l'intervalle [t1 ; t2] conformément au test 6b (bloc 70).

Des tests décrits ci-dessus contrôlent l'activation ou la désactivation de cylindres. Dans cette réalisation de l'invention, ces activations/désactivations sont effectuées selon des stratégies mises en oeuvre pour éviter les dysfonctionnements de moteurs tels que précédemment décrits.

Pour décrire de telles stratégies, on considère que, lorsque le moteur fonctionne selon le mode à quatre cylindres, il délivre un couple tendant vers le couple $C_{filtre}$ tel que :

$$(C_1 + C_2 + C_3 + C_4)/4 = C_{filtre,}$$

chaque cylindre i délivrant un couple Ci ($C_1$, $C_2$, $C_3$ ou $C_4$) égal à ce couple $C_{filtre}$ (quelquefois noté $C_0$ pour simplifier).

Lorsque le moteur fonctionne selon un mode à deux cylindres pour lequel, par exemple, les cylindres 1 et 4 sont actifs et les cylindres 2 et 3 désactivés, les cylindres 2 et 3 inactifs consomment de l'énergie pour entretenir leur mouvement. Cette énergie peut correspondre à un couple négatif $-C_{frottement}$ fourni par ces cylindres, c'est-à-dire: $C_2 = C_3 = -C_{frottement}$.

Pour éviter des discontinuités dans le couple $C_{filtre}$ fourni par le moteur lors de la désactivation des deux cylindres 2 et 3, les couples $C_1$ et C4 fournis par les cylindres 1 et 4 actifs doivent augmenter de façon à compenser, dans un premier temps, les diminutions des couples moteurs des cylindres 2 et 3, puis, dans un deuxième temps, les couples $-2C_{frottement}$ consommés par ces cylindres 2 et 3.

En d'autres termes, pour permettre au moteur de délivrer un couple $C_{filtre}$ en mode à deux cylindres, l'égalité suivante doit être vérifiée à la désactivation des cylindres 2 et 3:

$$[C_1 + C_4 - (2 \times C_{frottement})]) /4 = C_{filtre,}$$

le couple fourni par chacun des cylindres 1 et 4 actifs doit donc être égal à

$$C_1 = C_4 = 2 \times C_{filtre} + C_{frottement.}$$

Le passage d'un mode à un autre peut entraîner des vibrations ou des oscillations indésirables du véhicule. Pour éviter ces perturbations, le changement du mode à quatre cylindres vers le mode à deux cylindres est effectué progressivement comme expliqué à l'aide des figures 8a et 8b et du tableau 1 ci-dessous.

La figure 8a montre l'évolution des couples $C_{1/4}$, fourni par les cylindres 1 et 4, maintenus actifs, et $C_{2/3}$, fourni par les deux cylindres 2 et 3 désactivés. Sur cette figure on a porté en ordonnées la valeur C de ces couples en N.m et en abscisses l'avancement de la désactivation, cet avancement étant représenté par le nombre de points morts hauts (PMH) effectués par les cylindres à partir d'un premier $PMH_0$ pour lequel est déclenché le mode à deux cylindres, ce $PMH_0$ étant effectué par un cylindre maintenu inactif dans cet exemple.

On utilise un facteur k de variation permettant d'augmenter le couple $C_1/_4$ de façon à compenser la diminution du couple $C_{2/3}$. A chaque cycle de fonctionnement du moteur, le couple $C_1/_4$ devient égal à $C_{filtre}$ (1 + n.k), tandis que le couple $C_{2/3}$ devient égal à $C_{filtre}$ (1 - n.k), n étant le nombre de cycles effectués par le moteur à partir de la prise de décision de changement de mode et jusqu'au changement de mode.

Le nombre n de cycles dépend du mode d'évolution requis, c'est-à-dire d'une évolution plus ou moins rapide des couples fournis par les cylindres, et d'une valeur minimale $C_{mini}$ du couple pouvant être atteinte par les cylindres 2 et 3, valeur limite à partir de laquelle la combustion ne se produit plus dans le cylindre.

Lorsque le couple $C_{2/3}$ fourni par les cylindres 2 et 3 atteint cette valeur minimale $C_{mini}$, une stratégie de désactivation représentée sur la figure 8b est décrite à l'aide du tableau 1 ci-dessous est utilisé.

TABLEAU 1

| Avancement de la désactivation | C1/4 | C2/3 |
|---|---|---|
| Etape 1 | $C_{filtre}$ | $C_{filtre}$ |
| Etape 2 | $C_{filtre}(1 +k)$ | $C_{filtre}*( 1-k)$ |
| | $C_{filtre}(1 +2*k)$ | $C_{filtre}*(1 -2*k)$ |
| | $C_{filtre}(1 +3*k)$ | $C_{filtre}*(1-3*k)$ |
| | $C_{filtre}(1+4*k)$ | $C_{filtre}*(1-4*k)$ |
| | ... | ... |
| Etape 3 | $2*C_{filtre}- C_{mini}$ | $C_{mini}$ |
| | $2*C_{filtre}- C_{mini}$ | $C_{mini}$ |
| | $2*C_{filtre}- C_{mini}$ | $C_{mini}$ |
| Etape 4 | $2*C_{filtre}+ 1/2(C_{frottement}-C_{mini})$ | |
| Etape 5 | | $- C_{frottement}$ |
| | $2C_{filtre}+ C_{frottement}$ | |
| | | $- C_{frottement}$ |

Sur le tableau 1 sont représentés le couple $C_{1/4}$ délivré par chaque cylindre 1 et 4 (colonne "C1/4") et le couple $C_{2/3}$ délivré par les cylindres 2 et 3 (colonne "C2/3"). Ces couples varient en fonction de l'avancement de la désactivation des cylindres 2 et 3, cet avancement étant représenté par des étapes correspondant à chaque ligne de la colonne "Avancement de la désactivation", une étape i étant représentée comme un intervalle Ei de la figure 8b.

La première étape (étape 1 : $E_1$) de la désactivation des cylindres 2 et 3 correspond à un fonctionnement du moteur en mode à quatre cylindres, le couple $C_{1/4}$ et le couple $C_{2/3}$ étant égaux au couple moyen $C_{filtre}$ par cylindre délivré par le moteur.

Dès que la désactivation des cylindres 2 et 3 est décidée par l'unité centrale (étape 2: E2), le couple C1/4 délivré par chacun des cylindres 1 et 4 augmente linéairement de façon à tendre vers le couple final désiré $2C_{filtre} + C_{frottement}$.

Parallèlement, le couple C2/3 délivré par les cylindres 2 et 3 diminue linéairement et tend vers le couple $C_{frottement}$ comme précédemment décrit à l'aide de la figure 8a.

Le nombre d'itérations nécessaires pour que le couple $C_{1/4}$ fourni par les cylindres 1 et 4 atteigne la valeur de $2C_{filtre}-C_{mini}$ et que les cylindres 2 et 3 atteignent le couple $C_{mini}$, est fonction du régime moteur des couples $C_{mini}$, $C_{filtre}$ et de la valeur de k déterminée préalablement. En d'autres termes, le nombre d'itérations n'est pas prévisible.

Lorsque les cylindres 2 et 3 atteignent le couple $C_{mini}$ le couple $C_{2/3}$ ne peut plus être diminué en étant maintenu positif. Au contraire, si le couple $C_2/3$ diminue en dessous de cette limite, une énergie mécanique doit être fournie aux cylindres 2 et 3 pour maintenir leur mouvement.

C'est pourquoi, lors d'une troisième étape (étape 3 : $E_3$), on sature les cylindres 1 et 4 au couple $2xC_{filtre}-C_{mini}$ et les cylindres 2 et 3 au couple $C_{mini}$, parallèlement à la transmission d'un signal déclenchant la fermeture des soupapes des cylindres 2 et 3.

La désactivation des cylindres 2 et 3 débute à un instant tel que la désactivation des cylindres soit effectuée de façon à ce que des gaz de combustion soient maintenus dans les cylindres désactivés, c'est-à-dire que l'on tient compte des délais d'exécution de commande des actionneurs électrohydrauliques contrôlant les soupapes d'échappement. Ce temps de réponse des actionneurs, c'est-à-dire des électrovannes, du circuit d'huile et des butées, est déterminé empiriquement. Il dépend du régime et de la pression et/ou de la température d'huile.

Ainsi le nombre de demi-tours du moteur correspondant au temps de réponse est évalué à chaque appel de la fonction du régime et de la pression ou température d'huile. Si ce temps correspond à deux demi-tours du moteur la désactivation débute lors d'un PMH d'un cylindre maintenu actif. Si ce temps correspond, par exemple encore, à 3 demi-tours moteur la commande de l'électrovanne débute lors du PMH d'un cylindre désactivable.

Au cours de la désactivation des cylindres 2 et 3 (étape 4 : $E_4$), c'est-à-dire pendant la période correspondant par exemple à deux PMH nécessaires à la fermeture des soupapes d'échappement par les actionneurs électrohydrauliques, les cylindres 1 et 4 fournissent un couple intermédiaire égal à $2C_{filtre}+ 1/2 (C_{frottement}-C_{mini})$ tandis qu'à la fin de la désactivation (étape 5 : $E_5$), ce couple est maintenu à $2C_{filtre}+C_{frottement}$, le couple fourni par chaque cylindre 2 et 3 étant égal à $- C_{frottement}$.

A cet effet, il est nécessaire que la commande de fermeture des soupapes d'échappement maintenues fermées soit exécutée à partir d'un PMH correspondant à un cylindre maintenu actif (dans le cas où le temps de réponse correspond à deux demi-tours moteur), comme décrit ci-dessous à l'aide de la figure 8c qui représente un schéma relatif à de telles mesures sur lequel on a représenté le délai $\Delta t$, proche de deux PMH, qui est nécessaire à l'exécution de la commande de fermeture des soupapes d'échappement par des actionneurs électrohydrauliques, un tel délai ayant été déterminé empiriquement.

Par ailleurs, un délai $\Delta t'$ de mise en pression des poussoirs est aussi représenté suivant l'axe chronologique des abscisses.

En considérant ces deux délais $\Delta t$ et $\Delta t'$ et le fait que des gaz d'échappement doivent être conservés dans les cylindres désactivés, il apparaît que les actionneurs électrohydrauliques doivent être mis sous pression après le début d'une phase d'échappement (Ec) d'un cylindre dans sa dernière phase d'échappement actif et avant le début de la phase d'échappement du cycle suivant.

L'activation des deux cylindres 2 et 3 lors du passage d'un mode à deux cylindres vers un mode à quatre cylindres est décrite ci-dessous à l'aide du tableau 2 et de la figures 8d, une étape i' décrite dans le tableau 2 correspondant à une période E'i de la figure 8d.

TABLEAU 2

| Avancement de la désactivation | C1/4 | C2/3 |
|---|---|---|
| Etape 1 | | $-C_{frottement}$ |
| | $2C_{filtre} + C_{frottement}$ | |
| | | $-C_{frottement}$ |
| | $2C_{filtre} + C_{frottement}$ | $-C_{frottement}$ |
| Etape 2 | $2*C_{filtre}+ \frac{1}{2}(C_{frottement}-C_{mini})$ | |
| Etape 3 | | $C_{mini}$ |
| Etape 4 | $(2-k)*C_{filtre}-C_{mini}$ | |
| | | $C_{mini}+2*k*C_{filtre}$ |
| | $(2-3*k)*C_{filtre}-C_{mini}$ | |
| | | $C_{mini}+4*k*C_{filtre}$ |
| | ... | ... |
| Etape 5 | $C_{filtre}$ | $C_{filtre}$ |

Lors d'une première étape (étape 1'), le moteur fonctionne suivant un mode à deux cylindres tel que les cylindres actifs 1 et 4 fournissent un couple $C_{1/4}$ égale à $2xC_{filtre}+C_{frottement}$, tandis que les cylindres 2 et 3 fournissent un couple négatif égal à $C_{frottement}$.

Lors d'une deuxième étape (étape 2'), on transmet une commande de réactivation des cylindres 2' et 3'. Cette commande est transmise au dispositif électrohydraulique commandant des soupapes d'échappement des cylindres désactivés si le numéro de cylindre, le temps de réactivation de ces moyens de commande et le régime moteur sont compatibles avec le délai d'exécution de cette commande comme décrit ultérieurement. Autrement, la commande est transmise au point mort haut suivant. Pendant cette phase d'attente, la réactivation effective des échappements n'est pas effectuée.

Au cours de cette phase d'attente, un point mort haut avant la réactivation de l'échappement des cylindres désactivés, le couple commandé aux cylindres 1 et 4 est augmenté jusqu'à une valeur de $2xC_{filtre}+l/2$ ($C_{frottement}-C_{mini}$).

Au point mort haut suivant (étape 3), le couple $C_{2/3}$ transmet un couple $C_{mini}$ qui augmente par la suite (étape 4) de façon à tendre vers $C_{filtre}$ à partir d'itérations analogues à celles précédemment décrites pour la désactivation de cylindres.

L'utilisation d'une unité centrale et d'actionneurs électromécaniques permet de considérer divers modes de fonctionnement du moteur complémentaire au choix d'un mode propre à un nombre de cylindres actifs.

Comme précédemment décrit à l'aide de la figure 2, ces modes complémentaires sont choisis suivant un ordre donné tel que l'on détermine le nombre de cylindres actifs, puis les soupapes actives par cylindre et, finalement, le mode de levée de ces soupapes actives.

On considère par la suite que chaque cylindre est muni de deux soupapes d'admission, ces soupapes étant commandées indépendamment l'une de l'autre par un actionneur électromécanique tel que décrit à la figure 1. Quatre modes d'utilisation de ces soupapes sont prédéterminés pour chaque cylindre lors des phases d'admission :

- Selon un premier mode dit fermé, le cylindre est désactivé et aucune soupape d'admission n'est ouverte.
- Selon un deuxième mode dit impair, seule la soupape d'admission contrôlant l'injection de carburant est ouverte.
- Selon un troisième mode dit pair, seule la soupape d'admission contrôlant une entrée exclusive d'air dans la chambre de combustion est ouverte.
- Dans un quatrième mode dit ouvert, les deux soupapes d'admission sont ouvertes.

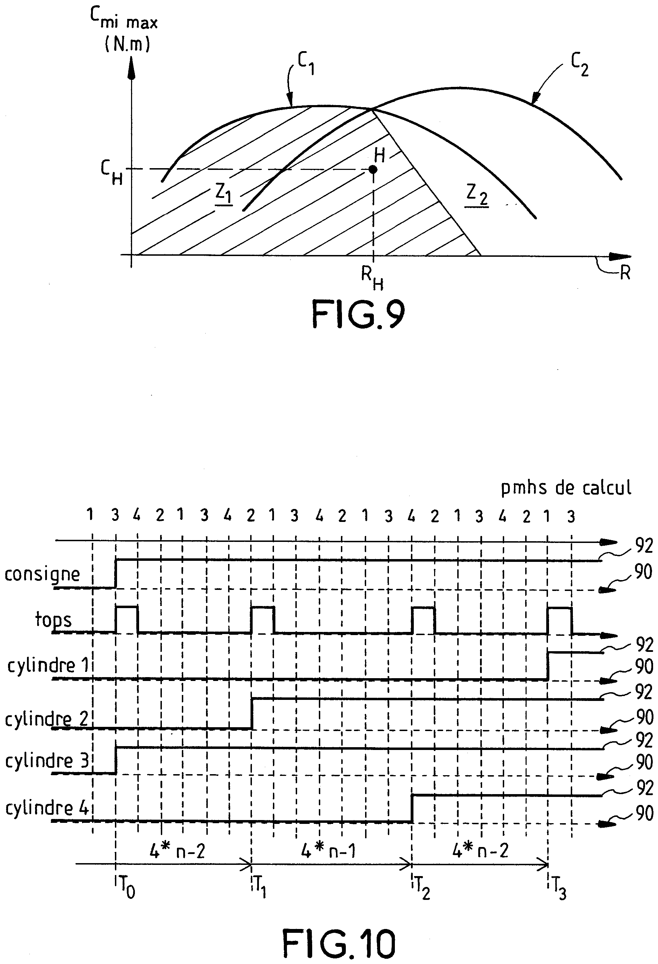

Le mode d'utilisation des soupapes est déterminé, à partir du fonctionnement du moteur, à l'aide d'un diagramme tel que représenté à la figure 9 qui est un diagramme sur lequel le couple (ordonnées) et le régime (abscisses) de ce moteur sont représentés en fonction du nombre de soupapes actives par cylindre. A cet effet, deux courbes $C_1$ et $C_2$ ont été obtenues de façon à délimiter les zones de fonctionnement (couple, régime) accessibles à ce moteur selon qu'une seule soupape d'admission (courbe $C_1$) ou deux soupapes d'admission (courbe $C_2$) sont activées par cylindre.

Comme représenté sur cette figure 9, l'utilisation d'une seule soupape d'admission permet d'obtenir à faible régime un couple plus élevé que l'utilisation de deux soupapes d'admission. Inversement, à fort régime, l'utilisation de deux soupapes d'admission permet de délivrer un couple plus élevé.

On fera donc fonctionner le moteur de préférence avec une seule soupape d'admission lorsque le régime est faible. Inversement, lorsque le régime du moteur est élevé, le fonctionnement du moteur avec deux soupapes d'admission par cylindre est privilégié. Finalement, lorsqu'un cylindre désactivé, les deux soupapes d'admission doivent être fermées.

Ces considérations sont représentées sur la figure 9 par des zones $Z_1$ ou $Z_2$ telles que, lorsque le moteur fonctionne à un couple C requis et à un régime $R_H$ donnés, le mode correspondant à la zone où se situe le point H de coordonnée $(C_H, R_H)$ est préféré.

Toutefois, comme pour les changements de mode de deux à quatre cylindres ou de quatre à deux cylindres, les changements du nombre de soupapes utilisées par cylindre peuvent engendrer des secousses. C'est pourquoi une transition d'un mode à une soupape vers un mode à deux soupapes, ou réciproquement, est appliquée de manière progressive en utilisant quatre étapes décrites ci-dessous :

- Dans une première étape, un premier cylindre se trouvant au point mort haut lors de la commande du changement de mode, par exemple d'un mode à deux soupapes actives vers un mode à une seule soupape, modifie son mode de fonctionnement.
- Après 4n-2 demi-tours du moteur, n étant fixé en fonction du moteur, un second cylindre en opposition de phase par rapport au premier cylindre effectue aussi ce changement de mode lorsqu'il atteint son point mort haut.
- 4n-1 demi-tours du moteur après ce deuxième changement de mode, un troisième cylindre effectue ce changement de mode lors de son point mort haut, et
- 4n-2 demi-tours du moteur après le changement de mode du troisième cylindre, le quatrième cylindre effectue le changement de mode lorsqu'il atteint son point mort haut.

Une telle opération est représentée sur la figure 10 où sont représentés les modes de fonctionnement "consignes" commandés correspondant à un mode 90 avec deux soupapes d'admission ou 92 avec une seule soupape d'admission.

En fonction de ces deux modes de fonctionnement, le mode de fonctionnement de chaque cylindre "cylindre 1 ", "cylindre 2", "cylindre 3" et "cylindre 4, est représenté.

Par ailleurs, on a représenté les instants "tops" de commande de changement de mode de fonctionnement émis vis-à-vis de chaque cylindre, instants correspondant à des PMH du cylindre commandé.

Ainsi, lorsque la consigne de basculement du moteur d'un mode à 2 soupapes d'admission vers un mode à 1 soupape d'admission est déclenchée à un instant T0, le cylindre 3 se trouvant au point mort haut à cet instant change son mode de fonctionnement à deux soupapes en un mode à une soupape.

Après un délai correspondant à un demi-tour du moteur (dans cette réalisation n = 2) le cylindre en opposition de phase par rapport au cylindre 3 bascule dans le nouveau mode de fonctionnement de consigne. Il s'agit donc du cylindre 2 qui change son mode de fonctionnement à l'instant T1. Il convient de signaler que lorsqu'un cylindre est désactivé, on peut commander le maintien en position fermée de ses deux soupapes d'admission ou le maintien en position ouverte d'une de ces deux soupapes de façon à conserver un film fluide du carburant.

Par ailleurs, lorsque deux cylindres sont désactivés, les consignes déterminant les modes de nombre de soupapes actives par cylindre varient entre les cylindres actifs et les cylindres désactivés. On évite ainsi de commander des changements de modes à des cylindres dont les soupapes d'admission sont maintenues fermées.

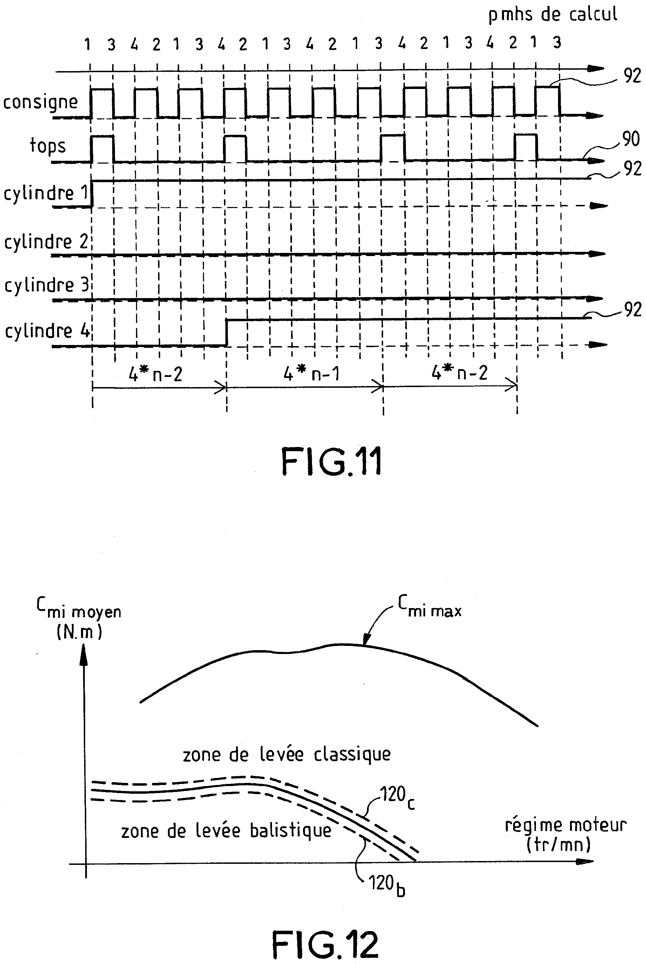

Une telle situation est montrée sur la figure 11, où l'on observe que la consigne pour les cylindres actifs 1 et 4 entraîne l'établissement du mode à une seule soupape d'admission (92) po u r un cylindre, tandis que les cylindres 2 et 3 désactivés sont maintenus suivant un mode (90) à deux soupapes d'admission.

Lorsque le nombre de soupapes d'admission utilisées est déterminé, le mode de levée opérée pour ces soupapes d'admission est sélectionné en fonction des paramètres de fonctionnement du moteur, l'ouverture de la soupape s'effectuant selon un mode de levée balistique, ou sebn un mode de levée classique.

On rappelle que, suivant un mode de levée classique, les instants d'ouverture et de fermeture des soupapes sont déterminés et commandés, tandis que suivant un mode balistique, l'instant de fermeture d'une soupape n'est pas commandé mais déterminé par le temps nécessaire à celle-ci pour passer d'une position fermée à la position ouverte puis, sans arrêt, revenir à la position fermée.

En d'autres termes, le mode classique utilise un signal d'ouverture et un signal de fermeture de soupape tandis que le mode balistique n'utilise qu'un signal d'ouverture.

Sur la figure 11 est représenté le mode de levée utilisé pour les soupapes actives en fonction des conditions (régime, couple) de fonctionnement du moteur. Il apparaît que le mode de levée balistique est particulièrement favorable lorsque le régime moteur est faible, par exemple lorsque le moteur fonctionne au ralenti.

Toutefois, lorsque le couple devant être délivré par le moteur est important, il est nécessaire que le mode d'ouverture des soupapes d'admission devienne un mode classique. C'est pourquoi, lorsque le moteur fonctionne selon un mode balistique, le mode de levée classique est imposé immédiatement dès que le moteur fonctionne dans une zone de levée classique étant donné que le mode balistique ne peut pas être utilisé pour des charges moyennes à fortes.

Inversement, le déclenchement d'un mode balistique s'effectue au moyen d'une stratégie identique à celle de la gestion des transitions des modes relatives au nombre de soupapes actives, c'est à dire :

- Dans une première étape, un premier cylindre se trouvant au point mort haut lors de la commande du changement de mode, par exemple d'un mode à deux soupapes actives vers un mode à une seule soupape, modifie son mode de fonctionnement.
- Après 4n-2 demi-tours du moteur, n étant fixé en fonction du moteur, un second cylindre en opposition de phase par rapport au premier cylindre effectue aussi ce changement de mode lorsqu'il atteint son point mort haut.
- 4n-1 demi-tours après ce deuxième changement de mode, un troisième cylindre effectue ce changement de mode lors de son point mort haut, et
- 4n-2 demi-tours après le changement de mode du troisième cylindre, le quatrième cylindre effectue le changement de mode lorsqu'il atteint son point mort haut ;

Toutefois, une nouvelle temporisation sera prise en compte avant, la première application du mode déclenché. En effet, si la consigne de couple est oscillante il est préférable d'appliquer une temporisation pour empêcher un passage immédiat du mode classique au mode balistique, c'est-à-dire que le couple de consigne doit présenter une valeur inférieure à un seuil d'hystérisis pendant une durée au moins égale à la temporisation pour passer du mode de levé classique au mode de levé balistique. Ainsi à chaque fois que le couple devient inférieur à une valeur d'hystérisis on déclenche la temporisation.

Par ailleurs, de façon analogue au changement du nombre de cylindres actifs en fonction du régime (figure 4), le changement du mode de levée est fonction d'une plage de stabilité telle que le seuil (courbe 120c) de déclenchement du mode de levée classique est distinct du seuil (courbe 120b) de levée balistique.

## Revendications

1. Moteur à combustion interne comportant un processeur (30) et des cylindres munis de soupapes commandées au moyen d'actionneurs électromécaniques, le processeur comporte des moyens (34, 38, 39) pour modifier le couple demandé (Cbrut) par le conducteur du véhicule en un couple filtré (Cfiltre) commandé au moteur, atténuant les variations de ce couple demandé (Cbrut), et pour déterminer en fonction de ce couple filtré (Cfiltre), un mode cylindre relatif au nombre de cylindres actifs, un cylindre désactivé étant tel que ses soupapes sont maintenues fermées et opérer l'activation ou la désactivation des cylindres lors d'un changement de mode cylindre, **caractérisé en ce que** le processeur comporte également des moyens pour, après le choix des cylindres actifs, déterminer pour ces cylindres actifs, un mode soupape relatif au nombre de soupapes d'admission actives par cylindre actif, et après la détermination du mode soupape, déterminer un mode de levée des soupapes actives des cylindres actifs, entre un mode de levée classique, dans lequel les instants d'ouverture et de fermeture des soupapes sont déterminés et commandés et un mode de levé balistique, dans lequel l'instant d'ouverture des soupapes est déterminé et commandé, l'instant de fermeture étant alors déterminé par le temps nécessaire pour qu'une soupape passe d'une positon fermée à la position ouverte puis, sans arrêt, revienne à une position fermée.

2. Moteur selon la revendication 1, **caractérisé en ce que** le processeur comporte des moyens pour déterminer un ou plusieurs modes en fonction d'informations concernant le moteur relatives à au moins un des paramètres suivants: le régime du moteur, le couple commandé au moteur, la température du liquide de refroidissement, la composition et/ou la température des gaz d'échappement, l'embrayage d'une vitesse, et/ou la quantité de carburant injectée dans les cylindres.

3. Moteur selon la revendication 1 ou 2 **caractérisé en ce que** le processeur comporte des moyens pour déterminer un ou plusieurs modes en fonction d'informations relatives à la conduite du véhicule qui sont relatives à au moins un des paramètres suivants: la vitesse du véhicule, la trajectoire du véhicule, un mode de conduite du véhicule.

4. Moteur selon l'une des revendications précédentes, comprenant un nombre pair de cylindres, **caractérisé en ce que** le processeur comprend des moyens pour positionner le fonctionnement du moteur selon l'un des trois modes suivants : un premier mode pour lequel tous les cylindres sont actifs, un second mode pour lequel seule la moitié des cylindres sont actifs, et un troisième mode selon lequel un nombre pair inférieur à la moitié des cylindres sont actifs.

5. Moteur selon la revendication 4, comprenant quatre cylindres fonctionnant suivant des cycles à quatre temps, **caractérisé en ce que**, lorsque seuls deux cylindres sont actifs, le processeur comporte des moyens pour maintenir actifs deux cylindres décalés d'un demi cycle de fonctionnement.

6. Moteur selon la revendication 4 ou 5, **caractérisé en ce que** le processeur comporte des moyens pour que le changement d'un mode cylindre à un autre mode cylindre s'effectue lorsque le régime de ce moteur atteint des valeurs seuils (R1, R'1; R2, R'2), ces valeurs seuils étant différentes selon que le changement de mode s'effectue du premier mode vers le deuxième mode ou du deuxième mode vers le premier mode.

7. Moteur selon l'une des revendications précédentes **caractérisé en ce que** le processeur comprend des moyens pour modifier le couple demandé (Cbrut) par le conducteur du véhicule en un couple filtré (Cfiltre) atténuant les variations de ce couple demandé (Cbrut) et pour déterminer un mode de fonctionnement du moteur en fonction de ce couple filtré.

8. Moteur selon la revendication 7 **caractérisé en ce que** le processeur comporte des moyens pour que le changement d'un mode cylindre à un autre mode cylindre s'effectue lorsque le couple filtré (Cfiltre) atteint un couple de test (C40"(min), C40' (min) C40" (max); C40' (max)) et que le couple demandé (Cbrut) par le conducteur atteint un couple (C40(min), C40(max)) de déclenchement de mode.

9. Moteur selon la revendication 8 **caractérisé en ce que**, le couple filtré (Cfiltre) atteignant un couple de test (C40" (min), C40' (min) C40" (max); C40' (max)) et le couple demandé (Cbrut) par le conducteur atteignant un premier couple (C40(min), C40 (max)) de déclenchement, le processeur comprend des moyens pour empêcher un changement de mode cylindre lorsque le couple commandé (Cbrut) atteint un deuxième couple (C40(min), C40(max)) de déclenchement.

10. Moteur selon la revendication 7, 8 ou 9 **caractérisé en ce que** le processeur comporte des moyens pour que le changement d'un mode à un autre mode s'effectue lorsque le couple (Cfiltre) filtré atteint un couple de test (C40"(min), C40' (min) C40" (max); C40' (max)) et que la variation ($\Delta$Cbrut) de couple demandé (Cbrut) est supérieure à un seuil maximal positif (DCmax; DC'max) de variation lorsque la variation est positive, ou inférieure à un seuil minimal négatif de variation (DC"min) lorsque la variation est négative.

11. Moteur selon la revendication 7 **caractérisé en ce que** le processeur comporte des moyens pour que le changement d'un mode cylindre à un autre mode cylindre s'effectue lorsque le couple (Cfiltre) filtré atteint un couple de test (C40"(min), C40' (min) C40" (max); C40' (max)) et que la variation ($\Delta$Cbrut) de couple (Cbrut) commandée est constamment comprise entre un seuil maximal (DCmax; DCmax; DCmax) et un seuil minimal (DCmin; DC'min; DC"min) de variation pendant un délai donné.

12. Moteur selon l'une des revendications précédentes, **caractérisé en ce que** le processeur comporte des moyens pour que, lorsque des cylindres sont en cours de désactivation, le couple fourni par les cylindres maintenus actifs augmente de façon à compenser le couple décroissant des cylindres en désactivation.

13. Moteur selon la revendication 12 **caractérisé en ce que** le processeur comporte des moyens pour que le couple fourni par les cylindres maintenus actifs augmente linéairement tandis que le couple généré par les cylindres à désactiver diminue linéairement, à partir du couple moteur par ces cylindres.

**14.** Moteur selon la revendication 13 **caractérisé en ce que** le processeur comporte des moyens pour que le couple décroissant des cylindres en cours de désactivation soit stabilisé à un premier couple seuil (Cmini) et pour que le couple croissant des cylindres actifs soit maintenu à un deuxième couple seuil (2Cfiltre - Cmini) fonction du premier couple seuil et du couple commandé (Cfiltre) au moteur.

**15.** Moteur selon la revendication 14 **caractérisé en ce que** le processeur comprend des moyens pour que le premier couple seuil (Cmini) corresponde à un couple limite tel que les cylindres désactivables ne peuvent pas fournir un couple positif inférieur à ce couple limite.

**16.** Moteur selon la revendication 14 ou 15, les soupapes d'échappement des cylindres désactivés étant commandées au moyen d'actionneurs électrohydrauliques, **caractérisé en ce que** le processeur comprend des moyens pour commander la fermeture des soupapes d'échappement des cylindres désactivés lorsqu'un des cylindres effectue un point mort haut de son cycle de fonctionnement.

**17.** Moteur selon la revendication 16 **caractérisé en ce que** le processeur comporte des moyens pour que le cylindre effectuant le point mort haut délivre un couple fonction du premier couple seuil(Cmini), du couple commandé (Cfiltre) et du couple (Cfrottement) fourni par un cylindre désactivé.

**18.** Moteur selon l'une des revendications précédentes **caractérisé en ce que** le processeur comporte des moyens pour que, lors de l'activation de cylindres désactivés, le couple fourni par les cylindres maintenus actifs diminue linéairement tandis que le couple généré par les cylindres en cours d'activation augmente linéairement vers le couple moteur commandé (Cfiltre).

**19.** Moteur selon la revendication 18 **caractérisé en ce que** le processeur comporte des moyens pour que la commande d'activation des cylindres désactivés soit déclenchée lorsqu'un des cylindres effectue un point mort haut de son cycle de fonctionnement.

**20.** Moteur selon la revendication 19 **caractérisé en ce que** le processeur comporte des moyens pour que, au cours du point mort haut du cylindre actif, ce dernier délivre un couple fonction d'un premier couple seuil(Cmini), du couple commandé (Cfiltre) et du couple (Cfrottement) fourni par un cylindre désactivé.

**21.** Moteur selon la revendication 20 **caractérisé en ce que** le processeur comporte des moyens pour qu'un deuxième point mort haut d'un cylindre en cours d'activation succède au point mort haut du cylindre actif, le cylindre en cours d'activation générant un couple lors de ce deuxième point mort haut égal au premier couple seuil (Cmini).

**22.** Moteur selon la revendication 20 ou 21 **caractérisé en ce que** le processeur comprend des moyens pour que le premier couple seuil (Cmini) corresponde à un couple limite tel qu'un cylindre pouvant être désactivé ne peut fournir un couple positif inférieur à ce couple limite.

**23.** Moteur selon l'une des revendications précédentes **caractérisé en ce que** le processeur comporte des moyens pour que tous les cylindres soient actifs lorsque le moteur est débrayé, lorsque le moteur fonctionne au ralenti et/ou lorsque le conducteur n'appuie pas sur l'accélérateur.

**24.** Moteur selon l'une des revendications précédentes, chaque cylindre comportant au moins une soupape contrôlant une admission d'un mélange d'air et de carburant et au moins une soupape contrôlant une admission d'air, **caractérisé en ce que** le processeur comporte des moyens pour commander au moins deux des modes soupapes suivants: un mode activant toutes les soupapes d'admission, un mode activant uniquement la (ou les) soupape(s) contrôlant une admission d'air et de carburant, un mode activant uniquement la (ou les) soupape(s) contrôlant une admission d'air, un mode désactivant toutes les soupapes d'admission.

**25.** Moteur selon l'une des revendications précédentes **caractérisé en ce que**, comportant quatre cylindres, le processeur comporte des moyens pour activer et/ou désactiver, lors d'un changement de mode soupapes, les soupapes d'admission d'un premier cylindre, puis les soupapes d'admission d'un deuxième cylindre décalé d'un demi cycle vis-à-vis de ce premier cylindre, puis les soupapes d'admission des deux cylindres restant.

**26.** Moteur selon l'une des revendications précédentes **caractérisé en ce que** le processeur comporte des moyens pour utiliser un mode de levée des soupapes d'admission classique, comportant une commande d'ouverture et une commande de fermeture des soupapes, ou un mode de levée balistique, comportant une unique commande d'ouverture ou de fermeture de la soupape d'admission.

27. Moteur selon la revendication 26 **caractérisé en ce que** le processeur comporte des moyens pour que le changement de mode de levée s'effectue lorsque le régime ou le couple de ce moteur atteint des valeurs seuils, ces valeurs seuils étant différentes selon que le changement de mode s'effectue d'un premier mode de levée vers un deuxième mode ou du deuxième mode de levée vers le premier mode.

28. Moteur selon la revendication 26 ou 27 **caractérisé en ce que** le processeur comporte des moyens pour commander le mode classique sans transition à partir d'un mode balistique.

29. Moteur selon l'une des revendications 26, 27 ou 28 comportant quatre cylindres **caractérisé en ce que** le processeur comporte des moyens pour commander le mode balistique à partir d'un mode classique, ce changement de mode s'appliquant aux soupapes d'admission d'un premier cylindre, puis aux soupapes d'admission d'un deuxième cylindre décalé d'un demi cycle vis-à-vis de ce premier cylindre, puis aux soupapes d'admission des deux cylindres restant.

**Patentansprüche**

1. Brennkraftmaschine, umfassend einen Prozessor (30) und Zylinder, die mit Ventilen versehen sind, die mit Hilfe von elektromagnetischen Aktuatoren gesteuert werden, wobei der Prozessor Mittel (34, 38, 39) umfasst, um das vom Fahrer des Fahrzeugs angeforderte Drehmoment (Cbrut) in ein am Motor gesteuertes gefiltertes Drehmoment (Cfiltre) zu verändern, das die Variationen dieses angeforderten Drehmoments (Cbrut) dämpft, und um in Abhängigkeit von diesem gefilterten Drehmoment (Cfiltre) einen Zylindermodus im Zusammenhang mit der Anzahl von aktiven Zylindern zu bestimmen, wobei deaktivierter Zylinder derart ist, dass seine Ventile geschossen gehalten werden und die Aktivierung oder Deaktivierung der Zylinder bei einer Änderung eines Zylindermodus durchgeführt wird, **dadurch gekennzeichnet, dass** der Prozessor auch Mittel umfasst, um nach der Auswahl der aktiven Zylinder für diese aktiven Zylinder einen Ventilmodus in Zusammenhang mit der Anzahl von aktiven Einlassventilen pro aktivem Zylinder zu bestimmen, und nach Bestimmung des Ventilmodus einen Hubmodus der aktiven Ventile der aktiven Zylinder zwischen einem herkömmlichen Hubmodus, in dem die Öffnungs- und Schließmomente der Ventile bestimmt und gesteuert werden, und einem ballistischen Hubmodus zu bestimmen, in dem der Öffnungsmoment der Ventile bestimmt und gesteuert wird, wobei der Schließmoment nun durch die Zeit bestimmt wird, die notwendig ist, dass ein Ventil von einer geschlossenen Position in die offene Position übergeht, dann ohne Unterbrechung wieder in eine geschlossene Position zurückkehrt.

2. Motor nach Anspruch 1, **dadurch gekennzeichnet, dass** der Prozessor Mittel umfasst, um eine oder mehrere Modi in Abhängigkeit von Informationen betreffend den Motor in Zusammenhang mit mindestens einem der folgenden Parameter zu bestimmen: der Motordrehzahl, dem am Motor gesteuerten Drehmoment, der Temperatur der Kühlflüssigkeit, der Zusammensetzung und/oder der Temperatur der Auspuffgase, dem Schalten eines Gangs, und/oder der in den Zylinder eingespritzten Kraftstoffmenge.

3. Motor nach Anspruch 1 oder 2, **dadurch gekennzeichnet, dass** der Prozessor Mittel umfasst, um einen oder mehrere Modi in Abhängigkeit von Informationen in Zusammenhang mit dem Lenken des Fahrzeugs zu bestimmen, die sich auf mindestens einen der folgenden Parameter beziehen: die Geschwindigkeit des Fahrzeugs, die Fahrstrecke des Fahrzeugs, einen Fahrmodus des Fahrzeugs.

4. Motor nach einem der vorhergehenden Ansprüche, umfassend eine gerade Anzahl von Zylindern, **dadurch gekennzeichnet, dass** der Prozessor Mittel umfasst, um die Funktion des Motors nach einem der drei folgenden Modi zu positionieren: einem ersten Modus, bei dem alle Zylinder aktiv sind, einem zweiten Modus, bei dem nur die Hälfte der Zylinder aktiv ist, und einem dritten Modus, bei dem eine gerade Anzahl kleiner als die Hälfte der Zylinder aktiv ist.

5. Motor nach Anspruch 4, umfassend vier Zylinder, die nach Viertaktzyklen funktionieren, **dadurch gekennzeichnet, dass**, wenn nur zwei Zylinder aktiv sind, der Prozessor Mittel umfasst, um zwei um einen halbe Funktionszyklus versetzte Zylinder aktiv zu halten.

6. Motor nach Anspruch 4 oder 5, **dadurch gekennzeichnet, dass** der Prozessor Mittel umfasst, damit die Änderung von einem Zylindermodus auf einen anderen Zylindermodus erfolgt, wenn die Drehzahl dieses Motors Grenzwerte (R1, R'1; R2, R'2) erreicht, wobei diese Grenzwerte unterschiedlich sind, je nachdem, ob die Modusänderung vom ersten Modus zum zweiten Modus oder vom zweiten Modus zum ersten Modus erfolgt.

7. Motor nach einem der vorhergehenden Ansprüche, **dadurch gekennzeichnet, dass** der Prozessor Mittel umfasst, um das vom Fahrer des Fahrzeugs angeforderte Drehmoment (Cbrut) in ein gefiltertes Drehmoment (Cfiltre), dass die Variationen dieses angeforderten Drehmoments (Cbrut) dämpft, zu verändern, und um einen Funktionsmodus des Motors in Abhängigkeit von diesem gefilterten Drehmoment zu bestimmen.

8. Motor nach Anspruch 7, **dadurch gekennzeichnet, dass** der Prozessor Mittel umfasst, damit die Änderung von einem Zylindermodus zu einem anderen Zylindermodus erfolgt, wenn das gefilterte Drehmoment (Cfiltre) ein Testdrehmoment (C40" (min), C40' (min) C40" (max); C40'(max)) erreicht, und wenn das vom Fahrer angeforderte Drehmoment (Cbrut) ein Drehmoment (C40(min), C40(max)) zur Modusauslösung erreicht.

9. Motor nach Anspruch 8, **dadurch gekennzeichnet, dass**, wobei das gefilterte Drehmoment (Cfiltre) ein Testdrehmoment (C40"(min), C40'(min) C40"(max); C40'(max)) erreicht, und das vom Fahrer angeforderte Drehmoment (Cbrut) ein erstes Auslösedrehmoment (C40(min), C40(max)) erreicht, der Prozessor Mittel umfasst, um eine Änderung eines Zylindermodus zu verhindern, wenn das angeforderte Drehmoment (Cbrut) ein zweites Auslösedrehmoment (C40(min), C40(max)) erreicht.

10. Motor nach Anspruch 7, 8 oder 9, **dadurch gekennzeichnet, dass** der Prozessor Mittel umfasst, damit die Änderung von einem Modus zu einem anderen Modus erfolgt, wenn das gefilterte Drehmoment (Cfiltre) ein Testdrehmoment (C40" (min), C40'(min) C40" (max); C40'(max)) erreicht, und wenn die Variation (ΔCbrut) eines angeforderten Drehmoments (Cbrut) größer als eine positive Variationsobergrenze (DCmax; DC'max) ist, wenn die Variation positiv ist, oder kleiner als eine negative Variationsuntergrenze (DC"min) ist, wenn die Variation negativ ist.

11. Motor nach Anspruch 7, **dadurch gekennzeichnet, dass** der Prozessor Mittel umfasst, damit die Änderung von einem Zylindermodus zu einem anderen Zylindermodus erfolgt, wenn das gefilterte Drehmoment (Cfiltre) ein Testdrehmoment (C40"(min), C40'(min) C40"(max); C40'(max)) erreicht, und wenn die Variation (ΔCbrut) eines angeforderten Drehmoments (Cbrut) konstant zwischen einer Variationsobergrenze (DCmax; DCmax; DCmax) und einer Variationsuntergrenze (DCmin; DC'min; DC"min) während einer gegebenen Zeitdauer liegt.

12. Motor nach einem der vorhergehenden Ansprüche, **dadurch gekennzeichnet, dass** der Prozessor Mittel umfasst, damit, wenn Zylinder gerade deaktiviert werden, das von den aktiv gehaltenen Zylindern gelieferte Drehmoment größer wird, um das kleiner werdende Drehmoment der in Deaktivierung befindlichen Zylinder auszugleichen.

13. Motor nach Anspruch 12, **dadurch gekennzeichnet, dass** der Prozessor Mittel umfasst, damit das von den aktiv gehaltenen Zylindern gelieferte Drehmoment linear größer wird, während das von den zu deaktivierenden Zylindern erzeugte Drehmoment ausgehend vom Motordrehmoment durch diese Zylinder kleiner wird.

14. Motor nach Anspruch 13, **dadurch gekennzeichnet, dass** der Prozessor Mittel umfasst, damit das kleiner werdende Drehmoment der in Deaktivierung befindlichen Zylinder auf einem ersten Grenzdrehmoment (Cmini) stabilisiert wird, und das größer werdende Drehmoment der aktiven Zylinder auf einem zweiten Grenzdrehmoment (2Cfiltre-Cmini) gehalten wird, das von dem ersten Grenzdrehmoment und dem am Motor gesteuerten Drehmoment (Cfiltre) abhängt.

15. Motor nach Anspruch 14, **dadurch gekennzeichnet, dass** der Prozessor Mittel umfasst, damit das erste Grenzdrehmoment (Cmini) einem derartigen Grenzdrehmoment entspricht, dass die deaktivierbaren Zylinder kein positives Drehmoment liefern können, das kleiner als dieses Grenzdrehmoment ist.

16. Motor nach Anspruch 14 oder 15, wobei die Auslassventile der deaktivierten Zylinder mit Hilfe von elektrohydraulischen Aktuatoren gesteuert werden, **dadurch gekennzeichnet, dass** der Prozessor Mittel umfasst, um das Schließen der Auslassventile der deaktivierten Zylinder zu steuern, wenn einer der Zylinder einen oberen Totpunkt eines Funktionszyklus ausführt.

17. Motor nach Anspruch 16, **dadurch gekennzeichnet, dass** der Prozessor Mittel umfasst, damit der Zylinder, der den oberen Totpunkt ausführt, ein Drehmoment in Abhängigkeit vom ersten Grenzdrehmoment (Cmini), vom gesteuerten Drehmoment (Cfiltre) und von dem von einem deaktivierten Zylinder gelieferten Drehmoment (Cfrottement) liefert.

**18.** Motor nach einem der vorhergehenden Ansprüche, **dadurch gekennzeichnet, dass** der Prozessor Mittel umfasst, damit bei der Aktivierung von deaktivierten Zylindern das von den aktiv gehaltenen Zylindern gelieferte Drehmoment linear kleiner wird, während das von den Zylindern während der Aktivierung erzeugte Drehmoment linear zum gesteuerten Motordrehmoment (Cfiltre) größer wird.

**19.** Motor nach Anspruch 18, **dadurch gekennzeichnet, dass** der Prozessor Mittel umfasst, damit die Aktivierungssteuerung der deaktivierten Zylinder ausgelöst wird, wenn einer der Zylinder einen oberen Totpunkt seines Funktionszyklus ausführt.

**20.** Motor nach Anspruch 19, **dadurch gekennzeichnet, dass** der Prozessor Mittel umfasst, damit während des oberen Totpunkts des aktiven Zylinders dieser letztgenannte ein Drehmoment in Abhängigkeit von einer ersten Grenzdrehmoment (Cmini), dem gesteuerten Drehmoment (Cfiltre) und dem von einem deaktivierten Zylinder gelieferten Drehmoment (Cfrottement) liefert.

**21.** Motor nach Anspruch 20, **dadurch gekennzeichnet, dass** der Prozessor Mittel umfasst, damit ein zweiter obere Totpunkt eines Zylinders während der Aktivierung auf den oberen Totpunkt des aktiven Zylinders folgt, wobei der Zylinder während der Aktivierung ein Drehmoment bei diesem zweiten oberen Totpunkt gleich dem ersten Grenzdrehmoment (Cmini) erzeugt.

**22.** Motor nach Anspruch 20 oder 21, **dadurch gekennzeichnet, dass** der Prozessor Mittel umfasst, damit das erste Grenzdrehmoment (Cmini) einem derartigen Grenzdrehmoment entspricht, dass ein Zylinder, der deaktiviert werden kann, kein positives Drehmoment kleiner als dieses Grenzdrehmoment liefern kann.

**23.** Motor nach einem der vorhergehenden Ansprüche, **dadurch gekennzeichnet, dass** der Prozessor Mittel umfasst, damit alle Zylinder aktiv sind, wenn der Motor ausgekuppelt ist, wenn der Motor im Leerlauf ist und/oder wenn der Fahrer nicht auf das Gaspedal steigt.

**24.** Motor nach einem der vorhergehenden Ansprüche, wobei jeder Zylinder mindestens ein Ventil, das einen Einlass eines Luft-/Kraftstoffgemisches steuert, und mindestens ein Ventil, das einen Lufteinlass steuert, umfasst, **dadurch gekennzeichnet, dass** der Prozessor Mittel umfasst, um mindestens zwei der folgenden Ventilmodi zu steuern: einen Modus, der alle Einlassventile aktiviert, einen Modus, der nur das (oder die) Ventil(e) aktiviert, die einen Luft- und Kraftstoffeinlass steuern, einen Modus, der nur das (oder die) Ventil(e) aktiviert, die einen Lufteinlass steuern, einen Modus, der alle Einlassventile deaktiviert.

**25.** Motor nach einem der vorhergehenden Ansprüche, **dadurch gekennzeichnet, dass** der Prozessor, umfassend vier Zylinder, Mittel umfasst, um bei einer Änderung eines Ventilmodus die Einlassventile eines ersten Zylinders, dann die Einlassventile eines zweiten um einen halben Zyklus zum ersten Zylinder versetzten Zylinders, dann die Einlassventile der zwei restlichen Zylinder zu aktivieren und/oder deaktivieren.

**26.** Motor nach einem der vorhergehenden Ansprüche, **dadurch gekennzeichnet, dass** der Prozessor Mittel umfasst, um einen herkömmlichen Hubmodus der Einlassventile, umfassend eine Öffnungssteuerung und eine Schließsteuerung der Ventile, oder einen ballistischen Hubmodus zu verwenden, umfassend eine einzige Öffnungs- oder Schließsteuerung des Einlassventils.

**27.** Motor nach Anspruch 26, **dadurch gekennzeichnet, dass** der Prozessor Mittel umfasst, damit die Änderung eines Hubmodus erfolgt, wenn die Drehzahl oder das Drehmoment dieses Motors Grenzwerte erreicht, wobei sich diese Grenzwerte unterscheiden, je nachdem, ob die Modusänderung von einem ersten Hubmodus in einen zweiten Modus oder von dem zweiten Hubmodus in den ersten Modus erfolgt.

**28.** Motor nach Anspruch 26 oder 27, **dadurch gekennzeichnet, dass** der Prozessor Mittel umfasst, um den herkömmlichen Modus ohne Übergang von einem ballistischen Modus zu steuern.

**29.** Motor nach einem der Ansprüche 26, 27 oder 28, umfassend vier Zylinder, **dadurch gekennzeichnet, dass** der Prozessor Mittel umfasst, um den ballistischen Modus von einem herkömmlichen Modus aus zu steuern, wobei diese Modusänderung an den Einlassventilen eines ersten Zylinders, dann an den Einlassventilen eines zweiten um einen halben Zyklus zu diesem ersten Zylinder versetzten Zylinders, dann an den Einlassventilen der zwei restlichen Zylinder angewandt wird.

**Claims**

1. An internal combustion engine comprising a processor (30) and cylinders provided with valves controlled by means of electromechanical actuators, the processor comprises means (34, 38, 39) for modifying the torque (Cbrut) requested by the driver of the vehicle in a filtered torque (Cfiltre) controlled to the engine, reducing the variations of this requested torque (Cbrut), and for determining as a function of this filtered torque (Cfiltre) a cylinder mode relative to the number of active cylinders, a deactivated cylinder being such that its valves are kept closed, and for operating the activation or deactivation of the cylinders during a change of cylinder mode, **characterized in that** the processor also comprises means for, after the choice of the active cylinders, determining for these active cylinders a valve mode relative to the number of active inlet valves per active cylinder, and after the determination of the valve mode, for determining a lift mode of the active valves of the active cylinders, between a conventional lift mode, in which the moments of opening and closing of the valves are determined and controlled and a ballistic lift mode, in which the moment of opening of the valves is determined and controlled, the moment of closing then being determined by the time necessary for a valve to pass from a closed position to the open position then, without pause, to return to a closed position.

2. The engine according to Claim 1, **characterized in that** the processor comprises means for determining one or several modes as a function of information concerning the engine relative to at least one of the following parameters: the speed of the engine, the torque controlled to the engine, the temperature of the cooling liquid, the composition and/or the temperature of the exhaust gases, the shifting of a gear, and/or the quantity of fuel injected in the cylinders.

3. The engine according to Claim 1 or 2, **characterized in that** the processor comprises means for determining one or several modes as a function of information relative to the driving of the vehicle which are relative to at least one of the following parameters: the speed of the vehicle, the trajectory of the vehicle, a mode of driving of the vehicle.

4. The engine according to one of the preceding claims, including an even number of cylinders, **characterized in that** the processor includes means for positioning the functioning of the engine according one of the three following modes: a first mode, for which all the cylinders are active, a second mode, for which only half of the cylinders are active, and a third mode according to which an even number less than half of the cylinders are active.

5. The engine according to Claim 4, including four cylinders functioning according to a four-stroke process, **characterized in that**, when only two cylinders are active, the processor comprises means for keeping two cylinders active, offset by a half operating cycle.

6. The engine according to Claim 4 or 5, **characterized in that** the processor comprises means so that the change from one cylinder mode to another cylinder mode is carried out when the speed of this engine reaches threshold values (R1, R'1; R2, R'2), these threshold values being different depending on whether the change of mode is carried out from the first mode to the second mode or from the second mode to the first mode.

7. The engine according to one of the preceding claims, **characterized in that** the processor includes means for modifying the requested torque (Cbrut) by the driver of the vehicle in a filtered torque (Cfiltre) reducing the variations of this requested torque (Cbrut) and for determining a mode of operation of the engine as a function of this filtered torque.

8. The engine according to Claim 7, **characterized in that** the processor comprises means so that the change from one cylinder mode to another cylinder mode is carried out when the filtered torque (Cfiltre) reaches a test torque (C40"(min), C40' (min) C40" (max); C40' (max)) and when the torque (Cbrut) requested by the driver reaches a torque (C40(min), C40(max)) for mode triggering.

9. The engine according to Claim 8, **characterized in that**, with the filtered torque (Cfiltre) reaching a test torque (C40" (min), C40' (min) C40" (max); C40' (max)) and the torque (Cbrut) required by the driver reaching a first triggering torque (C40(min), C40 (max)), the processor includes means for preventing a change of cylinder mode when the controlled torque (Cbrut) reaches a second triggering torque (C40(min), C40 (max)).

10. The engine according to Claim 7, 8 or 9, **characterized in that** the processor comprises means so that the change from one mode to another mode is carried out when the filtered torque (Cfiltre) reaches a test torque (C40"(min), C40' (min) C40" (max); C40' (max)) and when the variation (ΔCbrut) of requested torque (Cbrut) is greater than a positive maximum threshold (DCmax; DC'max) of variation when the variation is positive, or less than a negative minimum threshold of variation (DC"min) when the variation is negative.

11. The engine according to Claim 7, **characterized in that** the processor comprises means so that the change from one cylinder mode to another cylinder mode is carried out when the filtered torque (Cfiltre) reaches a test torque (C40"(min), C40' (min) C40"(max); C40' (max)) and when the variation (ΔCbrut) of controlled torque (Cbrut) is constantly comprised between a maximum threshold (DCmax; DCmax; DCmax) and a minimum threshold (DCmin; DC'min; DC"min) of variation during a given time period.

12. The engine according to one of the preceding claims, **characterized in that** the processor comprises means so that, when cylinders are in the course of deactivation, the torque supplied by the cylinders which are kept active increases so as to compensate for the decreasing torque of the cylinders in deactivation.

13. The engine according to Claim 12, **characterized in that** the processor comprises means so that the torque supplied by the cylinders which are kept active increases linearly while the torque generated by the cylinders to be deactivated reduces linearly, from the engine torque by these cylinders.

14. The engine according to Claim 13, **characterized in that** the processor comprises means so that the decreasing torque of the cylinders in the course of deactivation is stabilized at a first threshold torque (Cmini) and so that the increasing torque of the active cylinders is kept at a second threshold torque (2Cfiltre - Cmini) as a function of the first threshold torque and of the controlled torque (Cfiltre) to the engine.

15. The engine according to Claim 14, **characterized in that** the processor includes means so that the first threshold torque (Cmini) corresponds to a limit torque such that the deactivatable cylinders can not supply a positive torque less than this limit torque.

16. The engine according to Claim 14 or 15, the exhaust valves of the deactivated cylinders being controlled by means of electrohydraulic actuators, **characterized in that** the processor includes means for controlling the closure of the exhaust valves of the deactivated cylinders when one of the cylinders carries out a top dead centre of its operating cycle.

17. The engine according to Claim 16, **characterized in that** the processor comprises means so that the cylinder carrying out the top dead centre delivers a torque as a function of the first threshold torque (Cmini), of the controlled torque (Cfiltre) and of the torque (Cfrottement) provided by a deactivated cylinder.

18. The engine according to one of the preceding claims, **characterized in that** the processor comprises means so that, during the activation of deactivated cylinders, the torque provided by the cylinders which are kept active reduces linearly while the torque generated by the cylinders in the course of activation increases linearly towards the controlled engine torque (Cfiltre).

19. The engine according to Claim 18, **characterized in that** the processor comprises means so that the activation control of the deactivated cylinders is triggered when one of the cylinders carries out a top dead centre of its operating cycle.

20. The engine according to Claim 19, **characterized in that** the processor comprises means so that, in the course of the top dead centre of the active cylinder, the latter delivers a torque as a function of a first threshold torque (Cmini), of the controlled torque (Cfiltre) and of the torque (Cfrottement) provided by a deactivated cylinder.

21. The engine according to Claim 20, **characterized in that** the processor comprises means so that a second top dead centre of a cylinder in the course of activation follows the top dead centre of the active cylinder, the cylinder in the course of activation generating a torque at the time of this second top dead centre equal to the first threshold torque (Cmini).

22. The engine according to Claim 20 or 21, **characterized in that** the processor includes means so that the first threshold torque (Cmini) corresponds to a limit torque such that a cylinder being able to be deactivated can not provide a positive torque less than this limit torque.

23. The engine according to one of the preceding claims, **characterized in that** the processor comprises means so that all the cylinders are active when the engine is disengaged, when the engine is idling and/or when the driver is not depressing the accelerator.

24. The engine according to one of the preceding claims, each cylinder comprising at least one valve controlling an intake of a mixture of air and fuel, and at least one valve controlling an intake of air, **characterized in that** the processor comprises means for controlling at least two of the following valve modes: a mode activating all the inlet valves, a mode activating solely the valve (s) controlling an intake or air and of fuel, a mode activating solely the valve (s) controlling an intake of air, a mode deactivating all the inlet valves.

25. The engine according to one of the preceding claims, **characterized in that**, comprising four cylinders, the processor comprises means for activating and/or deactivating, during a change of valve mode, the inlet valves of a first cylinder, then the inlet valves of a second cylinder offset by a half cycle with respect to this first cylinder, then the inlet valves of the two remaining cylinders.

26. The engine according to one of the preceding claims, **characterized in that** the processor comprises means for using a conventional lift mode of the inlet valves, comprising an opening control and a closure control of the valves, or a ballistic lift mode, comprising a single control of opening or closure of the inlet valve.

27. The engine according to Claim 26, **characterized in that** the processor comprises means so that the change of lift mode is carried out when the speed or the torque of this engine reaches threshold values, these threshold values being different depending on whether the change of mode is carried out from a first lift mode to a second mode or from the second lift mode to the first mode.

28. The engine according to Claim 26 or 27, **characterized in that** the processor comprises means for controlling the conventional mode without transition from a ballistic mode.

29. The engine according to one of Claims 26, 27 or 28 comprising four cylinders, **characterized in that** the processor comprises means for controlling the ballistic mode from a conventional mode, this change of mode applying to the inlet valves of a first cylinder, then to the inlet valves of a second cylinder offset by a half cycle with respect to this first cylinder, then to the inlet valves of the two remaining cylinders.

# FIG.1

18

20

26

24

22

25

27

16

17

12

10

15

14

# FIG.2

FIG.3

FIG.4

FIG.5

# FIG.6a

Attente calcul suivant — 55

Autorisation de changement de mode — 52

50

54 — Test $C'_{40}$ (max)

faux →

faux ← $E\_commut = 1$ — 53 — vrai

vrai ↓

56 — $E\_commut = 0$ ?

58 — $C_{brut} > C_{40}$ (max)

vrai → $56_1$

$E\_commut = 1$ — 59

faux — $56_0$

60 — $\Delta C_{brut} > DC_{max}$

vrai — $60_1$

faux

62 — $\Delta C_{brut} < DC_{min}$

vrai → $E\_commut = 0$ — 63

faux

64 — $E\_commut = E\_commut + \delta$

# FIG.6b

66

Attente calcul suivant

Autorisation de changement de mode

vrai

54 — Test $C_{40}$ (max) — faux

faux — $E\_commut = 1$

56 — E_commut = 0 ?

vrai

68 — $C_{brut} > C_{40}$ (min) — vrai

70 — $C_{brut} > C_{40}$ (max) — 72 — E_commut = 0

faux

faux

E_commut = 1 — 74

vrai

76 — $\Delta C_{brut} > DC'_{max}$

faux

77 — $\Delta C_{brut} < DC'_{min}$ — vrai — 78 — E_commut = 0

faux

79 — E_commut = E_commut + δ

# FIG.6c

FIG. 7a

FIG. 7b

7c1

$C$

$C_{40}(max)$

$C'_{40}(max)$

$C_{brut}$    $C_{filtré}$

Temps

$t_1$    $t_2$    $t_3$

7c2

$\Delta C_{brut}$

$DC''_{max}$

Temps

$DC''_{min}$

7c3

$E\_commut$

1

$t_2$

0

Temps

$t_1$

# FIG.7c

**7d1**

**7d2**

**7d3**

## FIG.7d

FIG.8a

EP 1 384 863 B1

FIG.8b

FIG.8c

FIG.8d

FIG.9

FIG.10

pmhs de calcul

1 3 4 2 1 3 4 2 1 3 4 2 1 3 4 2 1 3 4 2 1 3

consigne

tops

cylindre 1

cylindre 2

cylindre 3

cylindre 4

4*n-2    4*n-1    4*n-2

## FIG.11

$C_{mi\ moyen}$
(N.m)

$C_{mi\ max}$

zone de levée classique

120$_c$

zone de levée balistique

régime moteur
(tr/mn)

120$_b$

## FIG.12

**EP 1 384 863 B1**

## RÉFÉRENCES CITÉES DANS LA DESCRIPTION

**Documents brevets cités dans la description**

- EP 1136661 A